# EUROPÄISCHE PATENTSCHRIFT

(11) **EP 4 077 239 B1**
(45) Veröffentlichungstag und Bekanntmachung des Hinweises auf die Patenterteilung: **25.10.2023**
(21) Anmeldenummer: 20842703.9
(22) Anmeldetag: 18.12.2020
(51) Int. Cl.: C04B 35/043, C04B 35/64, C04B 35/66, C04B 35/443

(54) **VERSATZ ZUR HERSTELLUNG EINES GROBKERAMISCHEN FEUERFESTEN BASISCHEN ERZEUGNISSES, DERARTIGES ERZEUGNIS SOWIE VERFAHREN ZU SEINER HERSTELLUNG, ZUSTELLUNG EINES INDUSTRIEOFENS UND INDUSTRIEOFEN**
BACKFILL FOR PRODUCING A BASIC HEAVY-CLAY REFRACTORY PRODUCT, SUCH A PRODUCT AND METHOD FOR PRODUCING SAME, LINING OF AN INDUSTRIAL FURNACE, AND INDUSTRIAL FURNACE
REMBLAI POUR LA PRODUCTION D'UN PRODUIT RÉFRACTAIRE BASIQUE À BASE D'ARGILE LOURDE, UN TEL PRODUIT ET PROCÉDÉ POUR SA PRODUCTION, REVÊTEMENT D'UN FOUR INDUSTRIEL ET FOUR INDUSTRIEL

(30) Priorität: 18.12.2019 DE 102019220085
(43) Veröffentlichungstag der Anmeldung: 26.10.2022
(73) Patentinhaber: Refratechnik Holding GmbH, 80807 München (DE)
(72) Erfinder: KLISCHAT, Hans-Jürgen, 37083 Göttingen (DE); VELLMER, Carsten, 37073 Göttingen (DE); WIRSING, Holger, 37081 Göttingen (DE)
(74) Vertreter: Dr. Solf & Zapf Patent- und Rechtsanwalts PartG mbB
(86) Internationale Anmeldenummer: PCT/EP2020/087296
(87) Internationale Veröffentlichungsnummer: WO 2021/123363

(56) Entgegenhaltungen:
- WO-A1-2019/053167
- US-A- 4 954 463
- US-A- 4 971 934

## Beschreibung

Die vorliegende Erfindung betrifft einen trockenen Versatz zur Herstellung eines grobkeramischen feuerfesten basischen, geformten Erzeugnisses, ein derartiges Erzeugnis sowie ein Verfahren zu dessen Herstellung und eine Zustellung eines Industrieofens und einen Industrieofen.

Der Begriff "feuerfest" soll im Rahmen der Erfindung nicht begrenzt sein auf die Definition gemäß ISO 836 bzw. DIN 51060, die einen Kegelfallpunkt von > 1500° C definieren. Feuerfeste Erzeugnisse im Sinne der Erfindung haben einen Druckerweichungspunkt T_{0,5} gemäß DIN EN ISO 1893: 2008-09 von T_{0,5} ≥ 600 °C, bevorzugt T_{0,5} ≥ 800 °C. Demnach sind feuerfeste bzw. refraktäre körnige Werkstoffe bzw. Körnungen im Sinne der Erfindung solche Werkstoffe bzw. Körnungen, die für ein feuerfestes Erzeugnis mit dem oben genannten Druckerweichungspunkt T_{0,5} geeignet sind.

Die erfindungsgemäßen feuerfesten Erzeugnisse werden zum Schutz von Aggregatkonstruktionen in Aggregaten eingesetzt, in denen Temperaturen zwischen 600 und 2000 °C, insbesondere zwischen 1000 und 1800° C, vorherrschen.

Grobkeramische Erzeugnisse sind bekanntermaßen Erzeugnisse, die aus Körnungen mit Korngrößen bis 6 mm, in besonderen Fällen auch bis 25 mm hergestellt werden (siehe "Gerald Routschka/Hartmut Wuthnow, Praxishandbuch "Feuerfeste Werkstoffe", 5. Auflage, Vulkan-Verlag (im Folgenden lediglich mit "Praxishandbuch" bezeichnet), Kapitel 2).

Dabei umfasst der Begriff "Körnung" bzw. "körniger Werkstoff" im Sinne der Erfindung einen schüttbaren Feststoff, der aus vielen kleinen, festen Körnern besteht. Weisen die Körner eine Korngröße ≤ 200 µm auf, handelt es sich bei der Körnung um ein Mehl bzw. Pulver. Sind die Körner durch mechanisches Zerkleinern, z.B. Brechen und/oder Mahlen, hergestellt, handelt sich um ein Brechgranulat bzw. eine gebrochene Körnung. Eine Körnung kann aber auch Granulatkörner oder Pelletkörner aufweisen, die durch Granulieren bzw. Pelletieren ohne mechanische Zerkleinerung hergestellt werden. Die Kornverteilung der Körnung wird in der Regel durch Siebung eingestellt.

Soweit nichts Gegenteiliges angegeben ist, werden die im Rahmen dieser Erfindung angegebenen Korngrößen zudem gemäß DIN 66165-2:2016-08 bestimmt.

Im Rahmen der Erfindung weisen Kornfraktionen bzw. Kornklassen zudem jeweils Korngrößen zwischen den beiden angegebenen Prüfkorngrößen auf. Die Bezeichnung Kornfraktion bzw. Kornklasse meint somit, dass keine Körner auf dem oberen Sieb liegen bleiben und keine durch das untere durchfallen. Es liegt also kein Überkorn und kein Unterkorn vor.

Im Gegensatz dazu schließt die Bezeichnung "Korngruppe" ein, dass einige Körner auf dem oberen Sieb liegen bleiben (Überkorn) und einige durch das untere Sieb durchfallen (Unterkorn).

Zudem weisen auf dem Fachgebiet verwendete Kornfraktionen bzw. Korngruppen Körner unterschiedlicher Größe auf. Sie weisen also eine Kornverteilung bzw. Korngrößenverteilung auf. Es handelt sich nicht um Einkornfraktionen bzw. -gruppen.

Bei den grobkeramischen Erzeugnissen wird zudem zwischen geformten und ungeformten Erzeugnissen unterschieden.

Bei geformten grobkeramischen Erzeugnissen handelt es sich um ungebrannte, getemperte oder keramisch gebrannte, vorzugsweise in einer keramischen Fabrik hergestellte, Produkte, insbesondere Steine oder Platten. Sie haben eine definierte Geometrie und sind einbaufertig. Die Formgebung erfolgt z.B. durch Pressen, Stampfen, Rammen oder Schlickergießen. Die geformten Erzeugnisse, insbesondere die Steine, werden z.B. zur Ausbildung einer Zustellung, mit Mörtel oder mörtelfrei ("knirsch") vermauert. Der Produktionsprozess von grobkeramischen geformten Erzeugnissen gliedert sich üblicherweise in die folgenden Schritte (Praxishandbuch, Seite 15/Punkt 2.1):
- Aufbereitung
- Mischen
- Formgebung
- Trocknen
- (gegebenenfalls) thermische Behandlung bis 800 °C, Brennen oder Sintern
- Nachbehandlung (falls erforderlich)

Bei ungeformten Erzeugnissen handelt es sich um Erzeugnisse, die, meist beim Anwender, aus einer ungeformten Masse oder aus Batzen, z.B. durch Gießen, Vibrieren, Stochern, Stampfen oder Spritzen, in ihre endgültige Form gebracht werden. Ungeformte Erzeugnisse werden am Verwendungsort meist hinter Schalungen in größeren Feldern eingebracht und bilden nach der Erhärtung einen Teil der Zustellung. Beispielsweise handelt es sich bei den ungeformten Erzeugnissen um Spritzmassen, Stampfmassen, Gießmassen, Vibrationsmassen oder Vergussmassen.

Sowohl geformte als auch ungeformte Erzeugnisse werden in an sich bekannter Weise aus einem grobkeramischen Versatz hergestellt.

Des Weiteren unterscheidet man bei den feuerfesten Erzeugnissen bekanntermaßen zwischen nichtbasischen (Praxishandbuch, 4.1) und basischen Erzeugnissen (Praxishandbuch, 4.2). Gemäß DIN EN ISO 10081 :2005-05 wird insbesondere basierend auf dem chemischen Reaktionsverhalten zwischen nicht basischen und basischen feuerfesten Erzeugnissen unterschieden. Die Erzeugnisgruppe der nicht basischen Erzeugnisse umfasst die Werkstoffe der SiO₂-Al₂O₃-Reihe und andere, nach ihrem chemischen Reaktionsverhalten nicht näher eingruppierbare Werkstoffe wie SiC- und Kohlenstoff-Produkte. Wesentliches Merkmal der meisten basischen Erzeugnisse ist es, dass die Summe der Oxide MgO und CaO überwiegt. Außerdem werden Chromit-, Picrochromit-, Spinell- und Forsteritsteine zu den basischen Erzeugnissen gerechnet, obwohl sie nahezu neutral sind. Zu den geformten basischen Erzeugnissen zählen insbesondere Magnesia enthaltende Erzeugnisse, insbesondere Magnesiaerzeugnisse, Magnesiachromiterzeugnisse, Magnesiaspinellerzeugnisse, Magnesiazirkoniaerzeugnisse, Magnesiapleonasterzeugnisse, Magnesiagalaxiterzeugnisse, Magnesiahercyniterzeugnisse, Magnesiadolomaerzeugnisse (siehe z.B. Praxishandbuch, S. 99/100, Tabellen 4.26 und 4.27). Basische ungeformte Erzeugnisse sind Erzeugnisse, deren Zuschlagstoffe im Wesentlichen aus Magnesia, Dolomit, Chrommagnesia, Chromerz und Spinell bestehen (siehe z.B. Praxishandbuch, S. 146).

Magnesiasteine weisen aufgrund ihres basischen Charakters und des hohen Schmelzpunktes von MgO eine hohe Heißfestigkeit und gute Beständigkeit gegen basische Fremdstoffe auf. Allerdings sind Magnesiasteine in der Regel sehr spröde, weil sie einen relativ hohen Elastizitätsmodul (E-Modul) und ungünstigen Schubmodul (G-Modul) aufweisen. Sie sind deshalb gegen Spannungswechsel, vor allem durch Temperaturschock empfindlich, weisen also eine geringe Temperaturwechselbeständigkeit (TWB) auf.

Man ist deshalb bestrebt, niedrigere Elastizitätsmoduli einzustellen, um die thermomechanische Haltbarkeit zu verbessern. Beispielsweise ist es hierzu bekannt, dem Versatz einen sogenannten Elastifizierer bzw. eine Elastifiziererkomponente zuzusetzen. Beispielsweise handelt es sich bei den elastifizierten Erzeugnissen um Magnesiachromit-, Magnesiaspinell-, Magnesiazirkonia-, Magnesiahercynit- und Magnesiagalaxiterzeugnisse, insbesondere -steine (Praxishandbuch, Seite 101/Nr.1). Die Elastifiziererkomponente kann dabei auch erst im keramischen Brand die elastifizierenden Produkte im Versatz erzeugen. Dies nennt man in situ Elastifizierung. Bei ungebrannten Erzeugnissen erfolgt die in situ Elastifizierung im Einsatz.

Elastifizierer sind somit körnige, feuerfeste, mineralische, meist auf Verbindungen der Grundstoffe basierende, Werkstoffe, die im Versatz in der Regel in Mengen 3 bis 30 M.-% (=Masse-%) bezogen auf die Summe aus Elastifizierer und Hauptkomponente enthalten sind. Sie bewirken in der Regel eine sogenannte Mikrorissbildung in der Matrix bzw. im Gefüge eines aus dem Versatz gebildeten feuerfesten Erzeugnisses bei hohen Temperaturen und anschließender Abkühlung aufgrund unterschiedlicher Ausdehnungskoeffizienten. Diese Elastifizierung verringert den Elastizitätsmodul und den Schubmodul und somit die Sprödigkeit des keramischen Erzeugnisses. Dadurch wird somit die Temperaturwechselbeständigkeit erhöht.

Als Elastifizierer werden somit Rohstoffe verwendet, deren thermische Ausdehnungskoeffizient erheblich über oder unter dem von Magnesia liegt. Beispielsweise werden als Elastifizierer Chromerze, Rohstoffe aus der Spinellgruppe (z.B. Hercynit, Pleonast, MA-Spinell), Zirkonoxid, Caliciumhexaaluminat und Smirgel verwendet.

Ein Beispiel für elastifizierte Erzeugnisse sind, wie bereits erläutert, Magnesiaspinellsteine.

Magnesiaspinellsteine sind gebrannte basische Erzeugnisse, die mineralogisch im Wesentlichen aus Periklas (MgO) und Spinell (MgO·Al₂O₃) bestehen. Klassifikationsgemäß enthalten sie zur Abgrenzung zu den Spinellsteinen mindestens 40 M.-% MgO. Der in Magnesiaspinellsteinen vorhandene MA-Spinell stammt entweder aus separater Vorsynthetisierung oder aus in-situ Bildung aus Al₂O₃-Zusätzen (Aluminarohstoffen) mit dem MgO des Magnesiarohstoffs, z.B. der Sintermagnesia, während des Brennprozesses der Steine (Praxishandbuch, Punkt 4.2.4.1.).

Bei Magnesia bzw. einem Magnesiarohstoff bzw. einer Magnesiasorte handelt es sich um einen Rohstoff, der überwiegend (> 50 M.-%) Magnesiumoxid (Periklas) enthält. Magnesiumcarbonat und MA-Spinell stellen somit keinen Magnesiarohstoff dar.

Aufgrund ihrer chemischen/mineralogischen Zusammensetzung sind Magnesiaspinellerzeugnisse sehr temperaturwechselbeständig. Aufgrund ihres im Vergleich zu reinen Magnesiaerzeugnissen geringen E-Moduls und geringen G-Moduls können sie thermische und mechanische Spannungen besser abbauen.

Magnesiaspinellerzeugnisse werden deshalb zur Zustellung der Brennzonen von Dreh- und Schachtöfen zum Brennen von Zement, Kalk, Dolomit und Magnesit verwendet.

In diesem Zusammenhang offenbart die US 4,971,934 einen feuerfesten Versatz, der mindestens 70 M.-% MgO, 4 bis 30 M.-% Al₂O₃ und 1,4 bis 7,5 M.-% MnO₂ aufweist. Mindestens ein Hauptanteil des Al₂O₃ liegt dabei in der Form von MgAl₂O₄ Spinell vor und der Anteil des Al₂O₃, welches in einer anderen Form vorliegt, beträgt nicht mehr als 10 M.-%.

Der das MgO bereitstellende Magnesiarohstoff weist dabei mindestens 90 M.-% MgO, vorzugsweise 96 bis 98 M.-% MgO auf. Der das Al₂O₃ bereitstellende Aluminarohstoff kann auch reines Alumina und/oder Bauxit, sein, welches Teil der Grobfraktion des Versatzes ist. In diesem Fall stellen die beiden vorgenannten Rohstoffe aber nicht mehr als 10 M.-% des Al₂O₃-Gehalts der gesamten Zusammensetzung bereit. Die Grobfraktion weist zudem Korngrößen bis 4,7 mm auf.

Die US 4,954,463 offenbart einen feuerfesten Versatz zur in-situ Bildung von Magnesium-Aluminat-Spinell, wobei der Versatz 65 bis 99 M.-% Magnesia mit einem MgO-Gehalt von mindestens 92 M.-% und 35 bis 1 M.-% Sinterbauxit mit einem Al₂O₃-Gehalt von mindestens 83 M.-% und einem SiO₂ Gehalt von weniger als 7 M.-% aufweist. Dabei liegt der Gesamtgehalt an SiO₂ des Versatzes bei weniger als 4 M.-%. Gemäß den Beispielen der US 4,954,463 enthält der Versatz 10 bis 20 M.-% an Sinterbauxit mit einer Korngröße kleiner 0,224 mm.

Die DE 43 19 741 C2 offenbart ein Verfahren zur Herstellung von feuerfesten Erzeugnissen auf der Basis von Magnesiumoxid, ausgehend von Sinter- und/oder Schmelzmagnesia-Körnung mit mindestens 95 M.-% MgO. Die Magnesia-Körnung wird mit poröser Aluminiumoxid-Körnung einer Größe von mindestens 0,5 mm vermischt, geformt und gebrannt. Bevorzugt wird als Aluminarohstoff kalzinierte Tonerde verwendet. Aufgeführt wird außerdem Tabulartonerde und Schmelzkorund. Vorzugsweise weist der Aluminarohstoff zudem einen Al₂O₃-Gehalt von mindestens 97 M.-% auf. Aufgrund der hohen Reinheit wird gemäß der DE 43 19 741 C2 eine hohe Feuerfestigkeit der daraus gefertigten Steine gewährleistet.

Des Weiteren ist es aus der WO 2004/056718 A2 bekannt, als Elastifiziererkomponente ein Calciumaluminat mit einem CaO/Al₂O₃-Verhältnis zwischen 0,14 und 0,2, insbesondere der chemischen Formel CaAl₁₂O₁₉ zu verwenden. Vorzugsweise weist die Elastifiziererkomponente die Oxidformel CaO · 6 Al₂O₃ bzw. die Kurzformel CA₆ auf.

Gemäß der WO 2007/096246 A2 wird als elastifizierender Zusatzstoff ein Forsteritwerkstoff oder ein, einen Forsteritwerkstoff bildendes, Gemenge verwendet.

Die WO 2019/053167 A1 offenbart ein Verfahren zur Herstellung einer Körnung aus Sintermagnesia, wobei die Sintermagnesia durch Sintern von Presslingen, insbesondere Pellets, aus MgO-Mehl, vorzugsweise aus MgO-Kaustermehl, und anschließendes mechanisches Zerkleinern der Presslinge hergestellt wird, wobei derart gesintert wird, dass die Körnung eine Kornporosität (Gesamtporosität) gemäß DIN EN 993-1:1195-04 und DIN EN 993-18:1999-01 von 15 bis 38 Vol.-%, vorzugsweise von 20 bis 38 Vol.-% aufweist. Zudem offenbart die WO 2019/053167 A1 einen die Körnung aus Sintermagnesia enthaltenden Versatz zur Herstellung eines grobkeramischen feuerfesten Erzeugnisses. Der Versatz kann als weitere Komponente Magnesiumaluminat-Spinell, Bauxit, Tonerde, Hercynit, Pleonast, Chromerz, pleonastischem Spinell, Zirkonoxid, O-livin und/oder Forsterit enthalten.

Aufgabe der vorliegenden Erfindung ist die Bereitstellung eines Versatzes zur Herstellung eines grobkeramischen feuerfesten basischen, geformten Erzeugnisses, wobei das Erzeugnis eine gute Temperaturwechselbeständigkeit sowie eine ausreichende Temperaturbeständigkeit aufweisen soll und kostengünstig herstellbar sein soll.

Weitere Aufgabe der Erfindung ist die Bereitstellung eines aus dem Versatz hergestellten Erzeugnisses, eines Verfahrens zu dessen Herstellung und eine Zustellung eines Industrieofens mit einem derartigen Erzeugnis und einen Industrieofen mit einer derartigen Zustellung.

Diese Aufgaben werden durch einen Versatz mit den Merkmalen von Anspruch 1, ein Erzeugnis mit den Merkmalen von Anspruch 9, ein Verfahren mit den Merkmalen von Anspruch 12, eine Zustellung mit den Merkmalen von Anspruch 13 sowie einen Industrieofen mit den Merkmalen von Anspruch 16 gelöst. Vorteilhafte Weiterbildungen der Erfindung sind in den sich jeweils anschließenden Unteransprüchen gekennzeichnet.

Die Aufgabe wird insbesondere gelöst durch einen trockenen Versatz zur Herstellung eines grobkeramischen, feuerfesten, geformten, gebrannten oder ungebrannten Magnesiaspinellerzeugnisses, insbesondere für ein Arbeitsfutter oder eine Hintermauerung eines großvolumigen Industrieofens, vorzugsweise einer Zementofenanlage, eines Kalkschacht- oder Kalkdrehrohrofens, eines Magnesit- oder Dolomitofens, oder eines Wärmeofens oder eines Ofens zur Energieerzeugung oder eines Ofens der Stahlerzeugung oder eines Ofens der Nichteisenmetallindustrie,
aufweisend ein Trockenstoffgemisch bestehend aus
a) einer körnigen Magnesiakomponente aus zumindest einer Magnesia mit einem MgO-Gehalt < 91,5 M.-%, bevorzugt < 90 M.-%, besonders bevorzugt < 89 M.-%, als Hauptkomponente, und
b) einer körnigen Elastifiziererkomponente in einer Menge von 2 bis 10 M.-%, bevorzugt von 3 bis 8 M.-%, besonders bevorzugt von 4 bis 6 M.-%, aus zumindest einem Sinterbauxit, wobei die Elastifiziererkomponente eine Korngröße gemäß DIN 66165-2:2016-08 ≤ 2,5 mm, bevorzugt von ≤ 2 mm, aufweist, und die Elastifiziererkomponente Körner mit einer Korngröße gemäß DIN 66165-2:2016-08 von ≤ 0,5 mm maximal in einer Menge von ≤ 25 M.-%, vorzugsweise ≤ 20 M.-%, bevorzugt ≤ 15 M.-%, aufweist.

Bevorzugt beträgt der MgO-Gehalt der Hauptkomponente < 90 M.-%, besonders bevorzugt < 89 M.-%.

Der trockene Versatz kann zudem auch eine weitere körnige Magnesiakomponente aus zumindest einer Magnesia mit einem höheren MgO-Gehalt als die Hauptkomponente aufweisen.

Infolgedessen wird die Aufgabe auch gelöst durch einen trockenen Versatz zur Herstellung eines grobkeramischen, feuerfesten, geformten, gebrannten oder ungebrannten Magnesiaspinellerzeugnisses, insbesondere für ein Arbeitsfutter oder eine Hintermauerung eines großvolumigen Industrieofens, vorzugsweise einer Zementofenanlage, eines Kalkschacht- oder Kalkdrehrohrofens, eines Magnesit- oder Dolomitofens, oder eines Wärmeofens oder eines Ofens zur Energieerzeugung oder eines Ofens der Stahlerzeugung oder eines Ofens der Nichteisenmetallindustrie,
aufweisend ein Trockenstoffgemisch bestehend aus
a) einer körnigen Magnesiakomponente aus zumindest einer Magnesia mit einem MgO-Gehalt < 91,5 M.-%, bevorzugt < 90 M.-%, besonders bevorzugt < 89 M.-%, als Hauptkomponente in einer Menge von ≥ 70 M.-%, vorzugsweise einer Menge von ≥ 85 M.-%,
b) einer körnigen Elastifiziererkomponente in einer Menge von 2 bis 10 M.-%, bevorzugt von 3 bis 8 M.-%, besonders bevorzugt von 4 bis 6 M.-%, aus zumindest einem Sinterbauxit, wobei die Elastifiziererkomponente eine Korngröße gemäß DIN 66165-2:2016-08 ≤ 2,5 mm, bevorzugt von ≤ 2 mm, aufweist, und die Elastifiziererkomponente Körner mit einer Korngröße gemäß DIN 66165-2:2016-08 von ≤ 0,5 mm maximal in einer Menge von ≤ 25 M.-%, vorzugsweise ≤ 20 M.-%, bevorzugt ≤ 15 M.-%, aufweist, und
c) einer weiteren körnigen Magnesiakomponente aus zumindest einer Magnesia mit einem höheren MgO-Gehalt als die Hauptkomponente.

Gemäß einer bevorzugten Ausführungsform weist die Hauptkomponente einen MgO-Gehalt < 90 M.-% auf und der gemittelte MgO-Gehalt aller Magnesiasorten des Trockenstoffgemisches zusammen genommen beträgt ≤ 91,5 M.-%.

Gemäß einer weiteren bevorzugten Ausführungsform weist die Hauptkomponente einen MgO-Gehalt von 85 bis < 90 M.-% auf und der gemittelte MgO-Gehalt aller Magnesiasorten des Trockenstoffgemisches zusammen genommen beträgt ≤ 91,5 M.-%.

Gemäß einer weiteren bevorzugten Ausführungsform weist die Hauptkomponente einen MgO-Gehalt < 89 M.-% auf und der gemittelte MgO-Gehalt aller Magnesiasorten des Trockenstoffgemisches zusammen genommen beträgt ≤ 91,5 M.-%, bevorzugt ≤ 90 M.-%.

Gemäß einer weiteren bevorzugten Ausführungsform weist die Hauptkomponente einen MgO-Gehalt von 87 bis < 89 M.-% auf und der gemittelte MgO-Gehalt aller Magnesiasorten des Trockenstoffgemisches zusammen genommen beträgt ≤ 91,5 M.-%, bevorzugt ≤ 90 M.-%.

Im Folgenden wird die Erfindung anhand einer Zeichnung beispielhaft näher erläutert. Es zeigen:
- Figur 1:: Eine lichtmikroskopische Aufnahme eines aus Sinterbauxit gebildeten Elastifiziererkorns in einem erfindungsgemäßen Stein nach dem Herstellungsbrand
- Figur 2:: Verteilung von Al und Mg in einem aus Sinterbauxit gebildeten Elastifiziererkorn in einem erfindungsgemäßen Stein (links) und in einem aus Tonerde gebildeten Elastifiziererkorn in einem nicht erfindungsgemäßen Stein (rechts)
- Figur 3:: Verteilung von Ca und Si in dem aus Sinterbauxit gebildeten Elastifiziererkorn in dem erfindungsgemäßen Stein (links) und in dem aus Tonerde gebildeten Elastifiziererkorn in einem nicht erfindungsgemäßen Stein (rechts)

Im Rahmen der Erfindung wurde überraschenderweise herausgefunden, dass es möglich ist, ein Magnesiaspinellerzeugnis mit guten mechanischen und thermomechanischen Eigenschaften und ausreichender Feuerfestigkeit aus einem eine mineralische Trockenstoffmischung enthaltenen Versatz herzustellen, die als Hauptkomponente eine unreine, körnige Magnesiakomponente enthält, wenn zur in situ Elastifizierung eine Elastifiziererkomponente aus Sinterbauxit verwendet wird.

Unrein meint dabei, dass die Magnesiakomponente aus zumindest einer Magnesia mit einem MgO-Gehalt von lediglich < 91,5 M.-%, bevorzugt < 90 M.-%, besonders bevorzugt < 89 M.-%, besteht. Die körnige, unreine Magnesiakomponente ist in dem Trockenstoffgemisch des Versatzes erfindungsgemäß in einer Menge von ≥ 70 M.-%, vorzugsweise ≥ 85 M.-%, enthalten.

Der MgO-Gehalt der unreinen Magnesia beträgt somit vorzugsweise erfindungsgemäß 85 bis < 91,5 M.-%, bevorzugt 85 bis < 90 M.-%, besonders bevorzugt 87 bis < 89 M.-%.

Sofern nicht anderweitig angegeben, werden der MgO-Gehalt, der Al₂O₃-Gehalt, der SiO₂-Gehalt und der Gehalt der Begleitoxide der Rohstoffe mittels Röntgenfluoreszenzanalyse gemäß DIN EN ISO 12667:2013-2 bestimmt.

Zudem handelt es sich bei der zumindest einen Magnesia der unreinen Magnesiakomponente vorzugsweise um eine gebrochene Körnung. Bevorzugt besteht die Magnesia der unreinen Magnesiakomponente ausschließlich aus gebrochenen Körnung(en).

In der Regel sinkt die Feuerfestigkeit bei der Verwendung von unreinen Rohstoffen ab. Denn die unreinen Rohstoffe enthalten einen relativ hohen Anteil an Begleitoxiden bzw. Nebenbestandteilen bzw. Verunreinigungen. Magnesia enthält insbesondere CaO, SiO₂ sowie Fe₂O₃ als Begleitoxide. Diese Verunreinigungen können die in-situ beim Brennprozess stattfindenden Reaktionen auf schadhafte Weise beeinflussen. Gefügefehler und verringerte Feuerfestigkeiten sind die Folge. Rissbildung über die angestrebten Mikrorisse hinaus kann zu Festigkeitsverlusten führen, die im Einsatz Abplatzungen verursachen. Somit ist der Fachmann generell von der Verwendung von unreinen Rohstoffen abgehalten, auch wenn diese in der Regel kostengünstiger sind.

Im Rahmen der Erfindung wurde nun überraschenderweise herausgefunden, dass ein Magnesiaspinellerzeugnis mit guten mechanischen und thermomechanischen Eigenschaften und ausreichender Feuerfestigkeit erhalten werden kann, wenn zur in-situ MA-Spinellbildung eine körnige Elastifiziererkomponente aus zumindest einem Sinterbauxit verwendet wird. Die Elastifiziererkomponente ist in dem Trockenstoffgemisch des Versatzes erfindungsgemäß in einer Menge von 2 bis 10 M.-%, bevorzugt von 3 bis 8 M.-%, besonders bevorzugt von 4 bis 6 M.-%, enthalten, bezogen auf die Trockenmasse des Trockenstoffgemisches.

Zudem weist die Elastifiziererkomponente erfindungsgemäß eine Korngröße gemäß DIN 66165-2:2016-08 ≤ 2,5 mm, bevorzugt von ≤ 2,0 mm, auf.

Außerdem wurde erfindungsgemäß heraus gefunden, dass der Feinstkornanteil der Elastifiziererkomponente nicht zu hoch sein darf. Denn der reaktive Feinstkornanteil kann zu einer veränderten Mineralphasenzusammensetzung in der Bindephase führen.

Erfindungsgemäß weist die Elastifiziererkomponente Körner mit einer Korngröße gemäß DIN 66165-2:2016-08 von ≤ 0,5 mm maximal in einer Menge bis 25 M.-%, bevorzugt bis 20 M.-%, besonders bevorzugt bis 15 M.-%, auf. Bzw. die Menge an Körnern mit einer Korngröße gemäß DIN 66165-2:2016-08 von ≤ 0,5 mm beträgt 0 bis 25 M.-%, bevorzugt 0 bis 20 M.-%, besonders bevorzugt 0 bis 15 M.-%.

Vorzugsweise weist die Elastifiziererkomponente aus dem oben genannten Grund zudem Körner mit einer Korngröße gemäß DIN 66165-2:2016-08 von ≤ 0,2 mm maximal in einer Menge bis 10 M.-%, bevorzugt bis 7 M.-%, besonders bevorzugt bis 5 M.-%, auf. Bzw. die Menge an Körnern mit einer Korngröße gemäß DIN 66165-2:2016-08 von ≤ 0,2 mm beträgt 0 bis 10 M.-%, bevorzugt 0 bis 7 M.-%, besonders bevorzugt 0 bis 5 M.-%.

Außerdem weist die Elastifiziererkomponente vorzugsweise Körner mit einer Korngröße gemäß DIN 66165-2:2016-08 von > 2 mm maximal in einer Menge ≤ 25 M.-%, bevorzugt ≤ 20 M.-%, besonders bevorzugt ≤ 10 M.-% auf. Bzw. die Menge an Körnern mit einer Korngröße gemäß DIN 66165-2:2016-08 von > 2 mm beträgt vorzugsweise 0 bis 25 M.-%, bevorzugt 0 bis 20 M.-%, besonders bevorzugt 0 bis 10 M.-%.

Die vorgenannten Mengenangaben beziehen sich selbstverständlich auf die Gesamtmenge an Elastifiziererkomponente.

Zudem handelt es sich bei dem zumindest einen Sinterbauxit ebenfalls vorzugsweise um eine gebrochene Körnung. Bevorzugt weist die Elastifiziererkomponente ausschließlich gebrochene Körnung(en) auf.

Überraschend war insbesondere, dass es möglich ist, ein Magnesiaspinellerzeugnis mit guten mechanischen und thermomechanischen Eigenschaften und ausreichender Feuerfestigkeit aus zwei unreinen Rohstoffen, nämlich einer unreinen Magnesia und einem unreinen Aluminarohstoff, nämlich dem Sinterbauxit, herzustellen. Denn der Sinterbauxit an sich ist im Vergleich zu Tonerde ein unreiner Aluminarohstoff und weist vorzugsweise lediglich einen Al₂O₃-Gehalt von 70 bis 92 M.-%, bevorzugt von 78 bis 91 M.-%, auf. Somit wäre aufgrund des hohen Anteils an Begleitoxiden sowohl in dem Magnesiarohstoff als auch in dem Sinterbauxit eigentlich zu erwarten gewesen, dass keine guten mechanischen, thermomechanischen Eigenschaften und Feuerfestigkeiten erzielt werden können.

Dabei wurde im Rahmen der Erfindung überraschenderweise auch festgestellt, dass mit reineren Aluminarohstoffen keine guten Eigenschaften erzielt werden können. Darauf wird im Rahmen der Ausführungsbeispiele näher eingegangen.

Vorzugsweise handelt es bei der zumindest einen Magnesia der Hauptkomponente um Sintermagnesia oder Schmelzmagnesia. Bevorzugt handelt es sich um Sintermagnesia.

Zudem weist die zumindest eine Magnesia der Hauptkomponente vorzugsweise folgende Eigenschaften auf, wobei diese einzeln für sich oder in jeglicher Kombination erfindungsgemäß verwirklicht sein können:

**Tabelle 1:Nebenoxidgehalte der Magnesia der Hauptkomponente**

| | | vorzugsweise |
|---|---|---|
| SiO₂-Gehalt [M.-%] | 0,5 bis 3 | 0,7 bis 2,5 |
| CaO-Gehalt [M.-%] | 0,5 bis 4 | 1,0 bis 3,5 |
| Fe₂O₃-Gehalt [M.-%] | 0,2 bis 10,0 | 0,5 bis 9,5 |
| MnO-Gehalt [M.-%] | 0 bis 1,5 | 0,1 bis 0,7 |

Des Weiteren weist die Hauptkomponente eine Korngrößenverteilung auf, die für die Herstellung eines grobkeramischen Magnesiaspinellerzeugnisses, vorzugsweise eines Magnesiaspinellsteins, üblich ist. Das heißt, die Hauptkomponente weist sowohl einen Feinkornanteil als auch einen Grobkornanteil auf. Dabei weisen sowohl der Feinkornanteil als auch der Grobkornanteil vorzugsweise eine stetige Korngrößenverteilung auf.

Mit Feinkornanteil werden im Rahmen der Erfindung alle Körnungen ≤ 1 mm bezeichnet. Der Grobkornanteil weist entsprechend Korngrößen > 1 mm auf.

Vorzugsweise weist die Hauptkomponente zudem eine maximale Korngröße ≤ 7 mm, bevorzugt ≤ 6,5 mm, auf.

Vorteilhaft ist auch, wenn die unreine Magnesia einen hohen Fe₂O₃-Gehalt aufweist. Denn es wurde festgestellt, dass das in der Magnesia enthaltene Magnesioferrit eine stabilen Phase ist, die das Gefüge nicht stört. Dies kann sich günstig auf die Festigkeit und das Ansatzverhalten auswirken. Vorzugsweise weist die unreine Magnesia einen Fe₂O₃-Gehalt von 0,2 bis 10 M.-%, bevorzugt 0,5 bis 9,5 M.-%, auf.

Wie bereits erläutert, besteht die Elastifiziererkomponente aus zumindest einem Sinterbauxit (=refraktärer Bauxit). Sinterbauxit ist ein deutlich unreinerer Aluminarohstoff als zum Beispiel Tonerde. Umso überraschender ist es, dass erfindungsgemäß heraus gefunden wurde, dass bei der Verwendung von Sinterbauxit deutlich bessere Eigenschaften der aus dem Versatz hergestellten Erzeugnisse erreicht werden können als bei der Verwendung von Tonerde. Gleichzeitig ist Sinterbauxit aber auch ein relativ kostengünstiger Aluminarohstoff.

Der zumindest eine Sinterbauxit der Elastifiziererkomponente weist dabei vorzugsweise folgende Eigenschaften auf, wobei diese einzeln für sich oder in jeglicher Kombination erfindungsgemäß verwirklicht sein können:

**Tabelle 2: Eigenschaften des Sinterbauxits der Elastifiziererkomponente**

| | | vorzugsweise |
|---|---|---|
| SiO₂-Gehalt [M.-%] | 4 bis 20 | 6 bis 15 |
| CaO-Gehalt [M.-%] | 0,1 bis 1,5 | 0,2 bis 0,5 |
| Fe₂O₃-Gehalt [M.-%] | 0,5 bis 4 | 0,9 bis 2 |
| TiO₂-Gehalt [M.-%] | 0,5 bis 4 | 2 bis 3,5 |

Grundsätzlich ist dabei davon auszugehen, dass die Feuerfestigkeit mit steigendem CaO- und/oder SiO₂-Gehalt sinkt, so dass der Fachmann eigentlich davon abgehalten ist, einen derartigen Rohstoff als Elastifiziererkomponente zu verwenden.

Außerdem weist die Elastifiziererkomponente eine Korngrößenverteilung innerhalb des angegebenen Bereichs auf. Die Korngrößenverteilung ist vorzugsweise stetig.

Des Weiteren kann der erfindungsgemäße Versatz zusätzlich zu der Hauptkomponente eine weitere körnige Magnesiakomponente enthalten. Die weitere Magnesiakomponente besteht aus zumindest einer Magnesia mit einem höheren MgO-Gehalt als der MgO-Gehalt der Hauptkomponente. Vorzugsweise ist die weitere körnige Magnesiakomponente in dem Trockenstoffgemisch in einer Menge von 5 bis 28 M.-%, bevorzugt 10 bis 22 M.-%, bezogen auf die Trockenmasse des Trockenstoffgemisches enthalten.

Der gemittelte MgO-Gehalt aller Magnesiasorten des Trockenstoffgemisches zusammen genommen, also der Hauptkomponente und, falls vorhanden, der weiteren Magnesiakomponente zusammen genommen, beträgt dabei vorzugsweise 85 bis 91,5 M.-%, bevorzugt 87 bis 90 M.-%, besonders bevorzugt 87 bis 89 M.-%.

Bzw. der gemittelte MgO-Gehalt aller Magnesiasorten des Trockenstoffgemisches zusammen genommen, also der Hauptkomponente und, falls vorhanden, der weiteren Magnesiakomponente zusammen genommen, beträgt vorzugsweise ≤ 91,5 M.-%, vorzugsweise ≤ 90 M.-%, bevorzugt ≤ 89 M.-%.

Zudem handelt es sich bei der zumindest einen Magnesia der weiteren körnigen Magnesiakomponente ebenfalls vorzugsweise um eine gebrochene Körnung. Bevorzugt weist die weitere körnigen Magnesiakomponente ausschließlich gebrochene Körnung(en) auf.

Vorzugsweise weist das Trockenstoffgemisch ausschließlich gebrochene Körnung(en) auf.

Insbesondere weisen alle Magnesiasorten zusammen genommen, also die Hauptkomponente und, falls vorhanden, die weitere Magnesiakomponente zusammen genommen, eine, vorzugsweise stetige, Kornverteilung auf, die für die Herstellung eines grobkeramischen Magnesiaspinellerzeugnisses, vorzugsweise eines Magnesiaspinellsteins, üblich ist. Das heißt, die Magnesiasorten weisen zusammen sowohl einen Feinkornanteil als auch einen Grobkornanteil auf. Dabei weisen sowohl der Feinkornanteil als auch der Grobkornanteil vorzugsweise eine stetige Kornverteilung auf.

Vorzugsweise weisen die Magnesiasorten zudem eine maximale Korngröße ≤ 7 mm, bevorzugt ≤ 6,5 mm, auf.

Das CaO/SiO₂-Verhältnis aller Bestandteile des Trockenstoffgemisches zusammen genommen beträgt vorzugsweise 1,2 bis 3,0, bevorzugt 1,5 bis 2,5. Für die Bestimmung des CaO/SiO₂-Verhältnis aller Bestandteile wird dabei jeweils der CaO- bzw. SiO₂-Gehalt der einzelnen Bestandteile aufsummiert und daraus das CaO/SiO₂-Verhältnis berechnet.

Der gemittelte MnO-Gehalt aller Bestandteile des trockenen Versatzes beträgt zudem vorzugsweise < 1,0 M.-%, bevorzugt < 0,8 M.-%.

Vorzugsweise weist der Versatz dabei keinen Rohstoff auf, der hauptsächlich aus MnO oder MnO₂ oder Mn₂O₃ besteht.

Wie bereits erläutert, hat es sich überraschenderweise gezeigt, dass aus dem erfindungsgemäßen Versatz hergestellte feuerfeste Erzeugnisse eine gute Temperaturwechselbeständigkeit (TWB), einen geringen E- und G- Modul sowie eine gute Kaltdruckfestigkeit und gute Kaltbiegefestigkeit bei gleichzeitig guter Feuerfestigkeit aufweisen.

Für die Herstellung des feuerfesten Erzeugnisses kann der erfindungsgemäße Versatz zusätzlich bzw. additiv zu dem mineralischen Trockenstoffgemisch zumindest ein trockenes bzw. festes Bindemittel aufweisen. Additiv heißt, die Menge an Bindemittel wird additiv zugegeben und bezieht sich auf die gesamte Trockenmasse des Trockenstoffgemisches.

Der erfindungsgemäße Versatz enthält das trockene Bindemittel vorzugsweise in einer Gesamtmenge von 0 bis 4 M.-%, bevorzugt von 0 bis 3 M.-%, bezogen auf die Trockenmasse des Trockenstoffgemisches.

Bei dem zumindest einen trockenen Bindemittel handelt es sich um ein für feuerfeste Erzeugnisse geeignetes Bindemittel. Diese Bindemittel sind beispielsweise im Praxishandbuch, Seite 28/Punkt 3.2 angegeben.

Zudem kann der Versatz auch zusätzlich bzw. additiv zu dem mineralischen Trockenstoffgemisch zumindest einen trockenen Zusatzstoff für feuerfeste Werkstoffe, vorzugsweise in einer Gesamtmenge < 5 M.-% (= 0 bis < 5 M.-%), bevorzugt < 3 M.-% (= 0 bis < 3 M.-%), bezogen auf das Trockenstoffgemisch enthalten.

Bei dem trockenen Zusatzstoff handelt es sich um einen für feuerfeste Erzeugnisse geeigneten Zusatzstoff. Der Zusatzstoff kann mineralisch oder chemisch sein. Geeignete Zusatzstoffe sind beispielsweise im Praxishandbuch, Seite 28/Punkt 3.3 angegeben. Sie werden verwendet, um die Verarbeitbarkeit bzw. Verformbarkeit zu verbessern oder das Gefüge der Erzeugnisse zu modifizieren und damit besondere Eigenschaften zu erzielen. Vorzugsweise enthält der Versatz allerdings keinen Zusatzstoff.

Es versteht sich von selber, dass der Anteil an dem Trockenstoffgemisch im Versatz so hoch ist, dass ein Magnesiaspinellerzeugnis daraus herstellbar ist. Vorzugsweise besteht der erfindungsgemäße Versatz zu mindestens 90 Gew.-%, bevorzugt zu mindestens 95 Gew.-%, besonders bevorzugt zu mindestens 98 Gew.-%, insbesondere zu 100 Gew.-% aus dem Trockenstoffgemisch, bezogen auf die Gesamtmasse des Versatzes.

Für die Herstellung von geformten Magnesiaspinellerzeugnissen, insbesondere Magnesiaspinellsteinen, aus dem erfindungsgemäßen Versatz wird eine Mischung bzw. Pressmasse bzw. Versatzfrischmasse aus dem trockenen Versatz mit zumindest einem flüssigen Bindemittel und/oder Wasser hergestellt. Wenn der Versatz ein flüssiges Bindemittel enthält, ist die Zugabe von Wasser nicht notwendig, aber möglich. Zudem ist die Zugabe von flüssigem Bindemittel nicht notwendig aber möglich, wenn der Versatz zumindest ein trockenes Bindemittel enthält.

Die Gesamtmenge an flüssigem Bindemittel in der Versatzfrischmasse bzw. Pressmasse beträgt vorzugsweise 2 bis 6 M.-%, bevorzugt 3 bis 5 M.-%, bezogen auf die Trockenmasse des Trockenstoffgemisches.

Vorzugsweise handelt es sich bei dem zumindest einen flüssigen Bindemittel um ein Bindemittel aus der folgenden Gruppe: wärmehärtendes Kunstharzbindemittel, insbesondere Phenol-Formaldehydharz, oder Melasse oder Ligninsulfonat oder um ein schwefelfreies Bindemittel, insbesondere um ein Bindemittel auf Basis Dextrose, eine organische Säure, Saccharose, einen Al₂O₃-Binder, Phosphorsäure, einen Phosphatbinder, Wasserglas, Ethylsilicat, oder ein Sulfat, z. B. Magnesiumsulfat oder Aluminiumsulfat, oder ein Sol-Gel-System.

Gegebenenfalls kann auch noch zumindest ein flüssiges Zusatzmittel zugegeben werden, welches ebenfalls additiv zu dem Trockenstoffgemisch zugegeben wird.

Bei dem flüssigen Zusatzmittel handelt es sich z.B. um ein Benetzungsmittel.

Die Gesamtmenge an flüssigem Zusatzmittel in der Versatzfrischmasse beträgt vorzugsweise < 1,0 M.-% (= 0 bis < 1 M.-%), bevorzugt < 0,5 M.-% (= 0 bis < 0,5 M.-%), bezogen auf die Trockenmasse des Trockenstoffgemisches.

Zur optimalen Verteilung des oder der Bindemittel und/oder des Wassers und gegebenenfalls des zumindest einen Zusatzmittels wird z.B. 3 bis 10 Minuten lang gemischt.

Die Mischung wird in Formen gegeben und gepresst, so dass Formkörper gebildet werden. Die Pressdrücke liegen in üblichen Bereichen, z.B. bei 60-180 MPa, bevorzugt bei 100-150 MPa.

Vorzugsweise wird nach dem Pressen eine Trocknung durchgeführt, z.B. zwischen 60 und 200 °C, insbesondere zwischen 90 und 140 °C. Die Trocknung erfolgt vorzugsweise bis auf eine Restfeuchte zwischen 0,1 und 0,6 M.-%, insbesondere zwischen 0,2 und 0,5 M.-%, bestimmt gemäß DIN 51078:2002-12.

Die erfindungsgemäßen Formkörper, insbesondere die Steine, können ungebrannt oder getempert oder gebrannt verwendet werden. Vorzugsweise werden sie allerdings gebrannt verwendet.

Getempert werden die grünen gepressten Steine in einem keramischen Brennofen, z.B. einem Tunnelofen, zwischen 200 und 800 °C, insbesondere zwischen 500 und 800 °C.

Zum Brennen werden die, vorzugsweise getrockneten, gepressten Steine in einem keramischen Brennofen, z.B. einem Tunnelofen, keramisch gebrannt, vorzugsweise zwischen > 800 und 1800 °C, insbesondere zwischen 1400 und 1700 °C. Vorzugsweise wird oxidierend gebrannt, abhängig von der Materialzusammensetzung kann aber auch ein reduzierender Brand vorteilhaft sein.

Die gebrannten, geformten Erzeugnisse, insbesondere die Steine, weisen eine sehr gute Kaltdruckfestigkeit gemäß DIN EN 993-5:1998-12 vorzugsweise von 40 bis 120 MPa, insbesondere 50 bis 90 MPa, auf.

Die Kaltbiegefestigkeit nach DIN EN 993-6:1995-04 der erfindungsgemäßen gebrannten, geformten Erzeugnisse, insbesondere der Steine, liegt vorzugsweise bei 3 bis 10 MPa, insbesondere bei 4 bis 7 MPa.

Außerdem weisen die gebrannten, geformten Erzeugnisse, insbesondere die Steine, vorzugsweise einen Druckerweichungspunkt T_{0,5} gemäß DIN EN ISO 1893: 2008-09 von 1100 bis 1750 °C, bevorzugt 1200 bis 1600°C, auf.

Des Weiteren weisen die gebrannten, geformten Erzeugnisse, insbesondere die Steine, vorzugsweise eine Stauchung Zₘₐₓ bei 1700°C gemäß DIN EN ISO 1893: 2008-09 von 0,5 bis 5 lin.-%, bevorzugt 1 bis 4 lin.-%, auf.

Zudem weisen die erfindungsgemäßen gebrannten, geformten Erzeugnisse, insbesondere die Steine, vorzugsweise einen E-Modul (Elastizitätsmodul) von 15 bis 35 GPa, bevorzugt von 18 bis 30 GPa, auf.

Der G-Modul (Schubmodul) der erfindungsgemäßen gebrannten, geformten Erzeugnisse, insbesondere der Steine, beträgt vorzugsweise 7 bis 16 GPa, bevorzugt 8 bis 14 GPa.

Der E-Modul und der G-Modul wurden bestimmt mit der GrindoSonic MK6.

Die Temperaturwechselbeständigkeit bestimmt nach DIN EN 993-11:2008-03 mit Luft bei einer erhöhten Prüftemperatur von 1200 °C der erfindungsgemäßen gebrannten, geformten Erzeugnisse, insbesondere der Steine, liegt vorzugsweise bei > 30 Abschreckzyklen, insbesondere bei > 50 Abschreckzyklen.

Die gebrannten, geformten Erzeugnisse, insbesondere die Steine, weisen zudem vorzugsweise eine offene Porosität von 12 bis 28 Vol.-%, bevorzugt 13 bis 20 Vol.-%, bestimmt gemäß DIN EN 993-1:1995-04 auf.

Und/oder sie weisen vorzugsweise eine Rohdichte von 2,60 bis 3,15 g/cm³, insbesondere von 2,75 bis 3,10 g/cm³, bestimmt gemäß DIN 993-1:1995-04 auf.

Alle vorgenannten Eigenschaften der erfindungsgemäßen Erzeugnisse, einschließlich des Versatzes, sind jeweils einzeln und in jeglicher Kombination erfindungsgemäß.

Die guten mechanischen und thermischen Eigenschaften resultieren insbesondere daraus, dass beim Brennen keine Gefügestörungen auftreten. Dies zeigt sich insbesondere auch dadurch, dass beim Brennen keine signifikante Volumenzunahme auftritt.

Anhand der nachfolgenden Beispiele wird die Erfindung verdeutlicht:
In einer ersten Versuchsreihe wurden als Vergleichsbeispiele Steine aus zwei unterschiedlich reinen Magnesiasorten mit einem MgO-Gehalt > 94 M.-% hergestellt. Als Elastifiziererkomponente wurde Tonerde (BSA=Brown Sintered Alumina) mit einem Al₂O₃-Gehalt von 96,5 M.-% verwendet.

In einer zweiten Versuchsreihe wurden als weitere Vergleichsbeispiele Steine aus einer unreinen Magnesia mit einem MgO-Gehalt < 88 M.-% hergestellt. Als Elastifiziererkomponente wurde wiederum die Tonerde mit einem Al₂O₃-Gehalt von 96,5 M.-% verwendet.

In einer dritten Versuchsreihe wurden als Vergleichsbeispiele Steine aus den beiden reinen Magnesiasorten und der unreinen Magnesia hergestellt. Als Elastifiziererkomponente wurden zwei unterschiedliche Sinterbauxite mit einem Al₂O₃-Gehalt von 90,5 M.-% bzw. 79,6 M.-% und in einer Kornfraktion von 0-1 mm verwendet.

In einer vierten Versuchsreihe wurden erfindungsgemäße Steine aus der unreinen Magnesia und den beiden Sinterbauxiten mit erfindungsgemäßen Kornfraktionen hergestellt.

Die Eigenschaften der verwendeten Rohstoffe sind in den nachstehenden Tabellen aufgeführt:

**Tabelle 3: Eigenschaften der verwendeten Magnesiarohstoffe**

| | | DBM 1 | DBM 2 | DBM 3 |
|---|---|---|---|---|
| Kornrohdichte Dg/cm³ | | 3,28 | 3, 1 9 | 3,33 |
| | | | | |
| chem. Analyse Masse-% | | | | |
| | SiO₂ | 0,89 | 2,11 | 0,58 |
| | Al₂O₃ | 0,14 | 0,48 | 0,26 |
| | Fe₂O₃ | 0,84 | 0,99 | 8,05 |
| | Cr₂O₃ | 0,01 | 0,02 | 0,01 |
| | MnO | 0,08 | 0,07 | 0,46 |
| | TiO₂ | 0,01 | 0,02 | 0,01 |
| | P₂O₅ | 0,18 | 0,11 | 0,05 |
| | CaO | 2,20 | 1,68 | 2,57 |
| | MgO | 95,58 | 94,48 | 87,95 |
| | Na₂O | 0,02 | 0,02 | 0,02 |
| | | | | |
| | G-Verlust | 0,11 | 0,12 | 0,18 |
| | | | | |
| | C+S | 3,09 | 3,79 | 3,15 |
| | C/S | 2,47 | 0,80 | 4,43 |

**Tabelle 4: Eigenschaften der verwendeten Aluminarohstoffe**

| | | Tonerde 96,5 | Bauxit 1 | Bauxit 2 |
|---|---|---|---|---|
| Kornrohdichte Dg/cm³ | | 3,50 | 3,20 | 3,07 |
| | | | | |
| chem. Analyse Masse-% | | | | |
| | SiO₂ | 0,90 | 4,57 | 13,57 |
| | Al₂O₃ | 96,50 | 90,47 | 79,64 |
| | Fe₂O₃ | 0,15 | 1,64 | 1,81 |
| | MnO | 0,01 | 0,01 | 0,01 |
| | TiO₂ | 1,20 | 2,90 | 3,20 |
| | P₂O₅ | 0,02 | 0,07 | 0,29 |
| | CaO | 0,01 | 0,03 | 0,55 |
| | MgO | 0,30 | 0,05 | 0,22 |
| | Na₂O | 0,30 | 0,02 | 0,06 |
| | | | | |
| | G-Verlust | | 0,12 | 0,18 |

Die Herstellung der Steine erfolgte folgendermaßen:
Aus dem jeweiligen Versatz wurde eine Pressmasse hergestellt. Zur optimalen Verteilung des Bindemittels wurde 4 Minuten lang gemischt. Die Pressmasse wurde in Formen gegeben und gepresst, so dass Steine gebildet wurden. Nach dem Pressen wurde eine Trocknung durchgeführt bei 110 °C für eine Zeit von 8h auf eine Restfeuchte von 0,1 M.-%, bestimmt gemäß DIN 51078:2002-12. Anschließend wurden die Steine oxidierend gebrannt.

Die verwendeten Versätze und die Eigenschaften der daraus hergestellten Steine sowie die Brenntemperatur sind in den nachfolgenden Tabellen angegeben. Im Falle des Sinterbauxits und der Tonerde handelt es sich bei den angegebenen Körnungen um Kornfraktionen und im Falle der Magnesiasorten handelt es sich um Korngruppen:

**Tabelle 5: Versätze und Ergebnisse der Versuchsreihe 1**

| Brenntemperatur | | 1430°C | 1430°C |
|---|---|---|---|
| Versatz Nr.: | | V1a | V1b |
| Bindemittel | Ligninsulfonat | 3,6 | 3,6 |
| | (45 % Konz.) | | |
| Format | mm | 70/65×200×220 | 70/65×200×220 |
| | | | |
| Pressdruck | MPa | 180 | 180 |
| | | | |
| DBM 1 | 2-4 | 27,0 | |
| DBM 1 | 1-2 | 20,0 | |
| DBM 1 | 0-1 | 14,0 | |
| DBM 1 | Mehl | 34,0 | |
| DBM 2 | 2-4 | | 27,0 |
| DBM 2 | 1-2 | | 20,0 |
| DBM 2 | 0-1 | | 14,0 |
| DBM 2 | Mehl | | 34,0 |
| Tonerde 96.5 | 0.5-1.0 | 5,0 | 5,0 |

| Kommentar | | STAND DER TECHNIK keine Risse | STAND DER TECHNIK keine Risse |
|---|---|---|---|
| Fertigrohdichte | g/cm³ | 2,92 | 2,80 |
| | | | |
| E Modul | GPa | 24,02 | 16,04 |
| G Modul | GPa | 11,41 | 8,15 |
| | | | |
| KDF | MPa | 87,25 | 51,45 |
| KBF | MPa | 6,14 | 4,36 |
| | | | |
| Porosität | Vol.-% | 16,68 | 19,23 |
| | | | |
| TWB, Luft, 1200°C | Zyklen | 1/-/>30 | 1/-/>30 |
| | | | |
| Schwindung | lin.-% | -0,28 | -1,84 |
| | | | |
| DE:Dₘₐₓ | lin.-% | 1,79 | 1,51 |
| T₀ | °C | 1556 | 1331 |
| T_{0.5} | °C | - | 1471 |
| T₁ | °C | - | 1523 |
| T₂ | °C | - | 1601 |
| T₅ | °C | - | |
| Zₘₐₓ (1700 °C) | lin.-% | 0,21 | 4,76 |

**Tabelle 6: Versätze und Ergebnisse der Versuchsreihe 2**

| Brenntemperatur | | 1430°C | 1430°C | 1430°C | 1430°C |
|---|---|---|---|---|---|
| Versatz Nr.: | | V2a | V2b | V2c | V2d |
| Bindemittel | Ligninsulfonat (45 % Konz.) | 3,6 | 3,6 | 3,6 | 3,6 |
| Format | mm | 70/65×200×220 | 70/65×200×220 | 70/65×200×2,20 | 70/65×200×22.0 |
| | | | | | |
| Pressdruck | MPa | 180 | 180 | 180 | 180 |
| | | | | | |
| DBM 2 | Mehl | 20,0 | 20,0 | 20,0 | 20,0 |
| D BM 3 | 2-4 | 28,0 | 28,0 | 28,0 | 28,0 |
| DBM 3 | 1-2 | 23,0 | 23,0 | 23,0 | 23,0 |
| DBM 3 | 0-1 | 14,0 | 15,0 | 16,0 | 17,0 |
| DBM 3 | Mehl | 10,0 | 10,0 | 10,0 | 10,0 |
| Bauxit 1 | 0.5-1.6 | | | | |
| Bauxit 1 | 0.5-1.0 | | | | |
| Tonerde 96.5 | 0.5-1.0 | 5,0 | 4,0 | 3,0 | 2,0 |

| Kommentar | | INSTABILE STEINGEFÜGE / STEINSCHÄDEN | | | |
|---|---|---|---|---|---|
| | | leichte Risse | Risse | Risse | Risse |
| Fertigrohdichte | g/cm³ | 2,93 | 2,92 | 2,92 | 2,98 |
| | | | | | |
| E Modul | GPa | 14,11 | 14,78 | 15,38 | 23,27 |
| G Modul | GPa | 7,43 | 7,67 | 8,09 | 11,67 |
| | | | | | |
| KDF | MPa | 47,00 | 48,65 | 44,15 | 62,30 |
| KBF | MPa | 3,91 | 3,40 | 3,95 | 4,56 |
| | | | | | |
| Porosität | Vol.-% | 17,45 | 17,39 | 18,15 | 16,62 |
| | | | | | |
| TWB, Luft, 1200°C | Zyklen | 1/-/>30 | 1/-/>30 | 1/-/>30 | 1/-/>30 |
| | | | | | |
| Schwindung | lin.-% | -1,06 | -1,64 | -1,44 | -0,56 |
| | | | | | |
| DE:Dₘₐₓ | lin.-% | 1,51 | n. b. | n. b. | n. b. |
| T₀ | °C | 1298 | (aufgrund der Gefügefehlerf Risse nicht bestimmt) | | |
| T_{0.5} | °C | 1449 | | | |
| T₁ | °C | 1,499 | | | |
| T₂ | °C | 1565 | | | |
| T₅ | °C | | | | |
| Zₘₐₓ (1700 °C) | lin.-% | 4,72 | | | |

**Tabelle 7: Versätze und Ergebnisse der Versuchsreihe 3**

| Brenntemperatur | | 1430°C | 1430°C | 1430°C | 1430°C | 1430°C | 1430°C | 1430°C | 1430°C | 1430°C | 1430°C | 1430°C | 1430°C |
|---|---|---|---|---|---|---|---|---|---|---|---|---|---|
| Versatz Nr.: | | V3a | V3b | V3c | V3d | V3e | V3f | V3g | V3h | V3i | V3j | V3k | V3l |
| Bindemittel | Ligninsulfonat (45 % Konz.) | 3,6 | 2,6 | 2,6 | 2,6 | 2,6 | 2,6 | 2,6 | 2,6 | 2,6 | 2,6 | 2,6 | 2,6 |
| Format 70/65×200×220 | mm | X | X | X | X | X | X | X | X | X | X | X | X |
| | | | | | | | | | | | | | |
| Pressdruck | MPa | 180 | 180 | 180 | 180 | 180 | 180 | 180 | 180 | 180 | 180 | 180 | 180 |
| | | | | | | | | | | | | | |
| DBM 1 | 2-4 | 27,0 | 27,0 | 27,0 | 27,0 | 27,0 | | | | | | | |
| DBM 1 | 1-2 | 20,0 | 15,0 | 18,0 | 18,0 | 18,0 | | | | | | | |
| DBM 1 | 0-1 | 14,0 | 19,0 | 16,0 | 16,0 | 16,0 | | | | | | | |
| DBM 1 | Mehl | 34,0 | 34,0 | 34,0 | 34,0 | 34,0 | | | | | | | |
| DBM 2 | 2-4 | | | | | | 27,0 | 27,0 | 27,0 | 27,0 | 27,0 | | |
| DBM 2 | 1-2 | | | | | | 20,0 | 15,0 | 18,0 | 18,0 | 18,0 | | |
| DBM 2 | 0-1 | | | | | | 14,0 | 19,0 | 16,0 | 16,0 | 16,0 | | |
| DBM 2 | Mehl | | | | | | 34,0 | 34,0 | 34,0 | 34,0 | 34,0 | 20,0 | 20,0 |
| DBM 3 | 2-4 | | | | | | | | | | | 28,0 | 28,0 |
| DBM 3 | 1-2 | | | | | | | | | | | 23,0 | 21,0 |
| DBM 3 | 0-1 | | | | | | | | | | | 14,0 | 16,0 |
| DBM 3 | Mehl | | | | | | | | | | | 10,0 | 10,0 |
| Bauxit 1 | 0-1 | 5,0 | | | 3,0 | | 5,0 | | | 3,0 | | 5,0 | 3,0 |
| Bauxit 1 | 1-2 | | 5,0 | | 2,0 | | | 5,0 | | 2,0 | | | 2,0 |
| Bauxit 1 | 0.5-1.6 | | | 5,0 | | | | | 5,0 | | | | |
| Bauxit 2 | 0-1 | | | | | 3,0 | | | | | 3,0 | | |
| Bauxit 2 | 1-2 | | | | | 2,0 | | | | | 2,0 | | |
| Kommentar | | | | | | | | | | | | | |
| | | | | | | | | | | | | | |
| Fertigrohdichte | g/cm³ | 2,93 | 2,90 | 2,89 | 2,89 | 2,87 | 2,93 | 2,93 | 2,95 | 2,93 | 2,92 | 3,02 | 3,04 |
| | | | | | | | | | | | | | |
| E Modul | GPa | 29,62 | 23,32 | 20,91 | 23,99 | 23,90 | 23,37 | 24,46 | 25,83 | 23,33 | 26,55 | 22,85 | 24,82 |
| G Modul | GPa | 14,32 | 11,51 | 10,35 | 11,58 | 12,27 | 13,05 | 13,85 | 14,48 | 13,15 | 14,81 | 12,94 | 13,67 |
| | | | | | | | | | | | | | |
| KDF | MPa | 112,30 | 79,00 | 70,60 | 77,60 | 74,20 | 111,20 | 108,30 | 112,01 | 113,00 | 110,70 | 96,30 | 102,70 |
| KBF | MPa | 7,68 | 5,16 | 5,36 | 6,27 | 6,14 | 6,39 | 5,41 | 5,94 | 6,21 | 6,74 | 6,04 | 5,51 |
| | | | | | | | | | | | | | |
| Porosität | Vol.-% | 15,86 | 17,65 | 17,54 | 17,37 | 17,08 | 16,37 | 16,30 | 15,49 | 16,42 | 16,57 | 15,24 | 14,71 |
| | | | | | | | | | | | | | |
| TWB, Luft, 1200°C | Zyklen | 1/-/>30 | 1/-/>30 | 1/-/>30 | 1/-/>30 | 1/-/>30 | 1/-/>30 | 1/-/>30 | 1/-/>30 | 1/-/>30 | 1/-/>30 | 1/-/>30 | 1/-/>30 |
| | | | | | | | | | | | | | |
| Schwindung | lin.-% | -0,21 | 0,14 | 0,00 | 0,00 | 0,00 | -0,14 | 0,00 | -0,07 | -0,04 | 0,11 | 0,28 | 0,42 |
| | | | | | | | | | | | | | |
| DE:Dₘₐₓ | lin.-% | 1,90 | | | 1,81 | | 1,68 | | | 1,73 | | 1,69 | 1,74 |
| T₀ | °C | 1462 | | | 1463 | | 1383 | | | 1371 | | 1349 | 1358 |
| T_{0.5} | °C | 1678 | | | 1668 | | 1533 | | | 1521 | | 1448 | 1496 |
| T₁ | °C | - | | | - | | 1594 | | | 1579 | | 1502 | 1571 |
| T₂ | °C | - | | | - | | 1658 | | | 1653 | | 1571 | 1639 |
| T₅ | °C | - | | | - | | - | | | - | | 1638 | - |
| Zₘₐₓ (1700 °C) | lin.-% | 0,64 | | | 0,74 | | 3,25 | | | 3,26 | | **Bruch!** | **Bruch!** |
| T_{f}/Z_{f} | °C/lin.-% | | | | | | | | | | | 1638 | 1686 |

**Tabelle 8:Versätze und Ergebnisse der Versuchsreihe 4**

| Brenntemperatur | | 1430°C | 1430 c | 1430°C | 1430 c | 1430°C | 1430°C | 1430°C |
|---|---|---|---|---|---|---|---|---|
| Versatz Nr.: | | V4a | V4b | V4c | V4d | V4e | V4f | V4g |
| Bindemittel | Ligninsulfonat (45 % Konz.) | 3,6 | 3,6 | 3,6 | 3,4 | 3,6 | 3,6 | 3,6 |
| Format | mm | 70/65x200x220 | 70/65x200x220 | 70/65x200x220 | 70/65x200x220 | 70/65x200x220 | 70/65x200x220 | 70/65x200x220 |
| | | | | | | | | |
| Pressdruck | MPa | 180 | 180 | 180 | 120 | 180 | 180 | 180 |
| | | | | | | | | |
| DBM 2 | Mehl | 20,0 | 20.0 | 20,0 | 20,0 | 20,0 | 20,0 | 20,0 |
| DBM 3 | 2-4 | 28,0 | 28,0 | 28,0 | 28,0 | 28,0 | 28,0 | 28,0 |
| DBM 3 | 1-2 | 23,0 | 23,0 | 21,5 | 23,0 | 22,0 | 23,0 | 23,0 |
| DBM 3 | 0-1 | 15,0 | 14,5 | 14,5 | 15,0 | 12,0 | 14,0 | 14,0 |
| DBM 3 | Mehl | 10,0 | 10.0 | 10,0 | 10,0 | 10,0 | 10,0 | 10,0 |
| Bauxit 1 | 2-2.5 | | | | | | 1,0 | |
| Bauxit 1 | 1-2 | | | | | | 1,0 | |
| Bauxit 1 | 0.5-1.6 | | | 6,0 | | | | |
| Bauxit 1 | 0.5-1 | 4,0 | 4,5 | | 4,0 | 8,0 | 2,0 | |
| Bauxit 1 | 0.2-0.5 | | | | | | 1,0 | |
| Bauxit 2 | 2-2.5 | | | | | | | 1.0 |
| Bauxit 2 | 1-2 | | | | | | | 1.0 |
| Bauxit 2 | 0.5-1 | | | | | | | 2,0 |
| Bauxit 2 | 0.2-0.5 | | | | | | | 1,0 |

| | | ERFINDUNGSGEMÄBE STEINE | | | | | | |
|---|---|---|---|---|---|---|---|---|
| | | keine Risse | keine Risse | keine Risse | keine Risse | keine Risse | keine Risse | keine Risse |
| FRD | g/cm³ | 3,04 | 3,03 | 3,02 | 2,97 | 2,99 | 3,03 | 3,02 |
| | | | | | | | | |
| E Modul | GPa | 25,36 | 22,28 | 19,10 | 21,06 | 16,43 | 23,37 | 23,38 |
| G Modul | GPa | 12,88 | 11,58 | 10,18 | 10,68 | 9,46 | 13,74 | 14,08 |
| | | | | | | | | |
| KDF | MPa | 102,95 | 95,50 | 83,40 | 75,30 | 85,55 | 99,35 | 95,10 |
| KBF | MPa | 5,88 | 5,23 | 4,68 | 4,63 | 4,71 | 5,70 | 5,58 |
| | | | | | | | | |
| Porosität | Vol.-% | 14,92 | 14,56 | 14,85 | 17,02 | 16,05 | 14,91 | 14,86 |
| | | | | | | | | |
| TWB, Luft, 1200°C | Zyklen | 1/-/>30 | 2/-/>30 | 2/-/>30 | 1/-/>30 | 1/-/>30 | 1/-/>30 | 1/-/>30 |
| | | | | | | | | |
| Schwindung | lin.-% | 0,13 | 0,25 | 0,08 | 0,33 | -0,28 | 0,21 | 0,28 |
| | | | | | | | | |
| DE:Dₘₐₓ | lin.-% | 1,76 | 1,71 | 1,63 | 1,80 | 1,68 | 1,67 | 1,65 |
| T₀ | °C | 1358 | 1842 | 1340 | 1324 | 1364 | 1332 | 1328 |
| T_{0.5} | °C | 1578 | 1481 | 1524 | 1481 | 1513 | 1542 | 1511 |
| T₁ | °C | 1653 | 1550 | 1593 | 1549 | 1572 | 1613 | 1581 |
| T₂ | °C | - | 1647 | 1678 | 1633 | 1667 | 1700 | 1637 |
| T₅ | °C | - | - | - | - | - | - | - |
| Zₘₐₓ (1700°C) | lin.-%. | 1,53 | 2,95 | 2,49 | 3,83 | 3,36 | 2,04 | 3,47 |

Die Ergebnisse der Versuchsreihe 1 zeigen, dass aus den beiden reinen Magnesiasorten und der Tonerde ohne Weiteres Steine mit guten mechanischen Eigenschaften und guter Feuerfestigkeit hergestellt werden konnten.

Die Steine der Versuchsreihe 2 aus der unreinen Magnesia und der Tonerde hingegen wiesen überraschenderweise keine guten mechanischen Festigkeiten auf. Die Steine wuchsen beim Brennen deutlich. Dies hat zu deutlichen Gefügefehlern (Risse) geführt. Die Steine hatten aufgrund der Gefügefehler keine guten Festigkeiten.

In der Versuchsreihe 3 zeigte sich, dass bei Verwendung der Sinterbauxite in zu feinen Körnungen in Kombination mit der unreinen Magnesia keine ausreichenden Feuerfestigkeiten erreicht werden konnten.

Im Rahmen der Versuchsreihe 4 wurden zahlreiche erfindungsgemäße Steine mit guten mechanischen Eigenschaften und guter Feuerfestigkeit hergestellt. Dabei wurde der Gehalt an Sinterbauxit variiert. Zudem wurden erfindungsgemäß lediglich Kornfraktionen verwendet, die einen erfindungsgemäß geringen Anteil an Körnungen < 0,5 mm aufwiesen.

Beim Herstellungsbrand sind die erfindungsgemäßen Steine moderat geschwunden. Die Festigkeiten der erfindungsgemäßen Steine entsprechen typischen Magnesiaspinellsteinen. Die Feuerfestigkeit (Druckerweichen) ist für einen Stein für die Brennzone eines Industrieofens vorteilhaft, da ein solches thermoplastisches Verhalten beim Einsatz in mechanisch belasteten Öfen genutzt werden kann.

Im Rahmen der Erfindung wird vermutet, dass die überraschend guten Eigenschaften der erfindungsgemäßen Steine unter anderem aus der Ausbildung einer Übergangszone (=Reaktionszone) zwischen der MgO-Matrix und den Elastifiziererkörnern resultiert. Um dies zu belegen wurden die Steine mittels Lichtmikroskopie, Röntgendiffraktometrie und Mikro-Röntgenfluoreszenz-Spektrometrie untersucht. Die Analyse der einzelner Elastifiziererkörner mit der Mikro-Röntgenfluoreszenz-Spektrometrie erlaubt eine räumliche Auflösung der Elementverteilung.

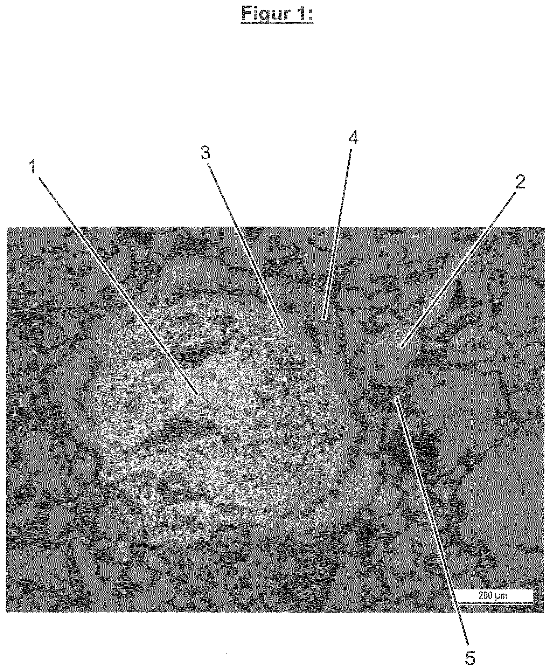

In Figur 1 ist eine lichtmikroskopische Aufnahme eines aus dem Sinterbauxit mit 90,5 M.-% Al₂O₃ gebildetes Elastifiziererkorns 1 in einer MgO-Matrix 2 eines erfindungsgemäßen Steins dargestellt. Gut zu erkennen sind ein innerer Ring 3 und ein äußerer Ring 4, die sich um das Elastifiziererkorn 1 herum gebildet haben und die Übergangszone bzw. Reaktionszone bilden. Zudem sind Poren 5 zu erkennen.

Die Ergebnisse der Röntgenpulverdiffraktometrie zeigt nachfolgende Tabelle:

| Mineralphasenbestand (qualitativ) | | |
|---|---|---|
| Versuch | V2a | V4b |
| Kommentar | nicht erfindungsqemäß | erfin,dunqsqemäß |
| Periklas (M) | ++++ | ++++ |
| Spinell (MA) | + | + |
| Korund (A) | ± | + |
| Magnesioferrit (MF) | + | + |
| Belit (C₂S) | ± | ± |
| Merwinit (C₃MS₂) | ± | ± |
| Hibonit (CA₈) | + | - |
| ++++ = Hauptphase | + = nachgewiesen | ± = Spur |
| - = nicht nachgewiesen | | |

Aus den Ergebnissen der Röntgendiffraktometrie und der Mikro-Röntgenfluoreszenz-Spektrometrie lässt sich ableiten, dass der innere Ring 3 Spinell enthält, welcher sich beim Brennen durch eine Reaktion der Magnesia mit dem Elastifiziererkorn 1 an dessen Randbereich gebildet hat. In dem äußeren Ring befinden sich zusätzlich die im Sinterbauxit enthaltenen Verunreinigungen bzw. Begleitoxide. Es wird davon ausgegangen, dass die Reaktion des Elastifiziererkorns 1 mit der Magnesia aufgrund der Ausbildung des äußeren Ringes 4 gestoppt wird und infolgedessen die Volumenvergrößerung beim Brennen verhindert wird und die Steine deshalb nicht geschädigt werden.

Die Röntgenpulverdiffraktometrie zeigte zudem, dass sich durch die hohen CaO-Gehalte bei dem Stein mit der Tonerde nicht nur in-situ-Spinell, sondern auch Hibonit (CAe) gebildet hat. Die Bildung von Hibonit (CAe) ist in der Regel unerwünscht, da sie zu einer Volumenzunahme führt. Aus den Ergebnissen der Mikro-Röntgenfluoreszenz-Spektrometrie lässt sich ableiten, dass Hibonit (CA₆) in der Übergangszone gebildet wurde. Bei dem erfindungsgemäßen Stein dagegen war kein Hibonit (CA₆) nachweisbar.

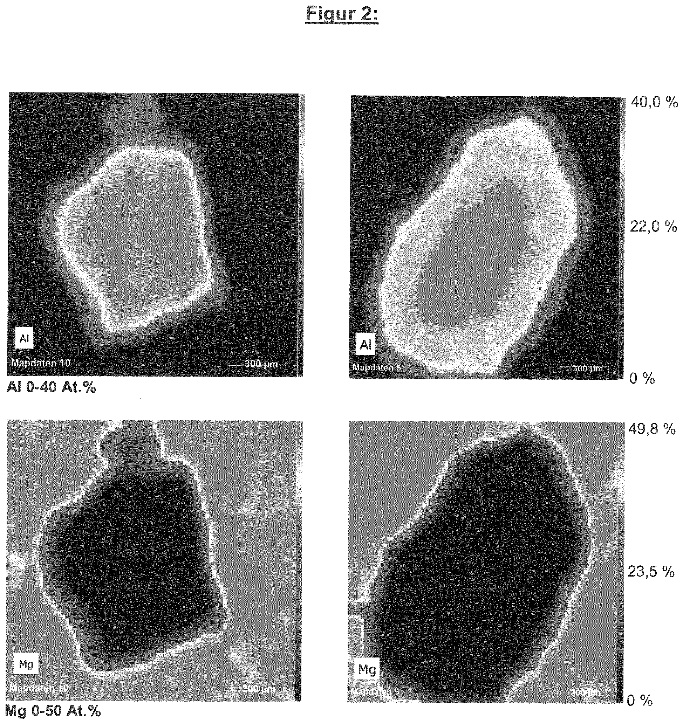

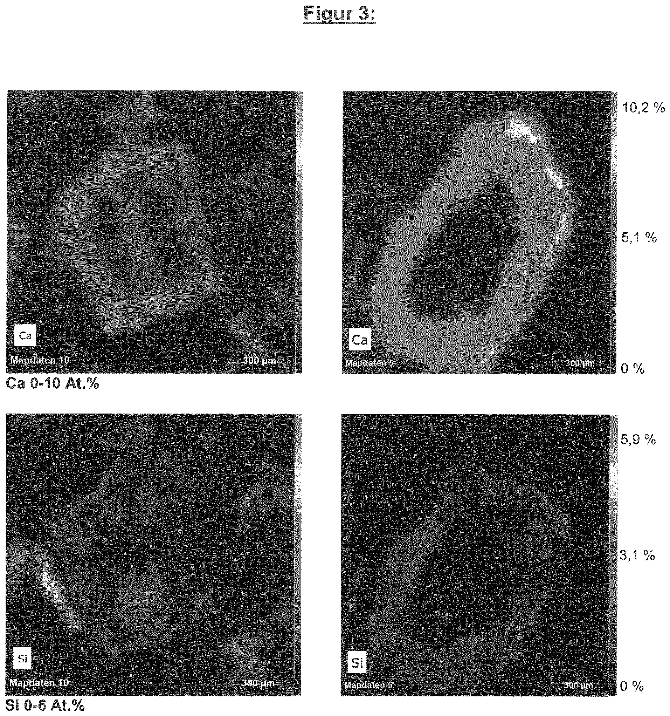

In den Figuren 2 und 3 ist die mittels Mikro-Röntgenfluoreszenz-Spektrometrie ermittelte Verteilung von Al, Mg, Ca und Si in und um ein Elastifiziererkorn aus Sinterbauxit mit 90,5 M.-% Al₂O₃ (links) und in und um ein Elastifiziererkorn aus der Tonerde (rechts) nach einem keramischen Brand bei 1430 °C dargestellt. Für eine Vergleichbarkeit wurde für die Darstellung des jeweiligen Elementes in beiden Fällen die gleiche Skalierung (At.-%) verwendet.

In Abhängigkeit von dem verwendeten Aluminarohstoff sind Unterschiede in der Ausbildung der jeweiligen Übergangszone zu erkennen.

Im Fall der Tonerde ist der Bereich zwischen dem chemisch kaum veränderten Kern und dem äußeren Ring aus Spinell deutlich breiter als bei der Verwendung des Sinterbauxits. Bei der Tonerde ist in der Übergangszone insbesondere eine Anreicherung von CaO und SiO₂ erkennbar.

Bei der Tonerde hat sich zudem eine Zone aus Calcium-Aluminat entwickelt (10 - 14 % CaO), die wiederum von einem CaO-freien Saum aus MA-Spinell umgeben ist (34 % MgO). In der Zone aus Calcium-Aluminat ist SiO₂ angereichert (bis zu 2.8 %), in dem umgebenden Ring aus MA-Spinell hingegen nicht.

Beim Sinterbauxit ist vom Zentrum zum Rand hin eine kontinuierliche Abnahme des SiO₂-Gehaltes zu beobachten. Die Anreicherung von CaO im Übergangsbereich ist in einem signifikant geringeren Umfang erfolgt als bei der Tonerde. Auch hier schließt sich ein Ring aus MA-Spinell an. Der SiO₂-Gehalt innerhalb des Elastifiziererkorns variiert bei dem Sinterbauxit im Bereich von 12 - 22 %. Vergleichsweise niedrige Al₂O₃-Gehalte deuten darauf hin, dass neben der röntgenographisch nachgewiesenen Phase MA-Spinell erhebliche Anteile an Melilith (C₂AS) und Merwinit (C₃MS₂) gebildet wurden, die bei den gewählten Brenntemperaturen als Schmelzphase vorliegen können. Im Fall des Sinterbauxits wird somit vermutlich die Aktivität des CaO durch den SiO₂-Anteil in den Rohstoffen durch die Bildung von Schmelzphasen und/oder Calcium-Magnesium-Silikaten oder Calcium-Aluminium-Silikaten verringert. Dadurch wird die unerwünschte Bildung von Hibonit (CAe) verhindert und eine Volumenzunahme beim Brennen verhindert. Der Sinterbauxit puffert die Reaktion zu Hibonit (CAe) über die Bildung von Nebenphasen ab und ist infolgedessen reaktionsträger.

## Patentansprüche

1. Trockener Versatz zur Herstellung eines grobkeramischen, feuerfesten, geformten, gebrannten oder ungebrannten Magnesiaspinellerzeugnisses, insbesondere für ein Arbeitsfutter oder eine Hintermauerung eines großvolumigen Industrieofens, vorzugsweise einer Zementofenanlage, eines Kalkschacht- oder Kalkdrehrohrofens, eines Magnesit- oder Dolomitofens, oder eines Wärmeofens oder eines Ofens zur Energieerzeugung oder eines Ofens der Stahlerzeugung oder eines Ofens der Nichteisenmetallindustrie,
aufweisend ein Trockenstoffgemisch bestehend aus
a) einer körnigen Magnesiakomponente aus zumindest einer Magnesia mit einem MgO-Gehalt < 91,5 M.-%, bevorzugt < 90 M.-%, besonders bevorzugt < 89 M.-%, als Hauptkomponente in einer Menge von ≥ 70 M.-%, vorzugsweise einer Menge von ≥ 85 M.-%,
b) einer körnigen Elastifiziererkomponente in einer Menge von 2 bis 10 M.-%, bevorzugt von 3 bis 8 M.-%, besonders bevorzugt von 4 bis 6 M.-%, aus zumindest einem Sinterbauxit mit einem Al₂O₃-Gehalt von 78 bis 92 M.-%, bevorzugt von 78 bis 91 M.-%, wobei die Elastifiziererkomponente eine Korngröße gemäß DIN 66165-2:2016-08 ≤ 2,5 mm, bevorzugt von ≤ 2 mm, aufweist, und die Elastifiziererkomponente Körner mit einer Korngröße gemäß DIN 66165-2:2016-08 von ≤ 0,5 mm maximal in einer Menge von ≤ 25 M.-%, vorzugsweise ≤ 20 M.-%, bevorzugt ≤ 15 M.-%, aufweist, und
c) gegebenenfalls einer weiteren körnigen Magnesiakomponente aus zumindest einer Magnesia mit einem höheren MgO-Gehalt als die Hauptkomponente,
wobei der gemittelte MgO-Gehalt aller Magnesiakomponenten des Trockenstoffgemisches zusammen genommen 85 bis 91,5 M.-%, bevorzugt 87 bis 90 M.-%, besonders bevorzugt 87 bis 89 M.-%, beträgt.

2. Versatz nach Anspruch 1,
**dadurch gekennzeichnet, dass**
a) die Elastifiziererkomponente Körner mit einer Korngröße gemäß DIN 66165-2:2016-08 von ≤ 0,2 mm maximal in einer Menge von ≤ 10 M.-%, vorzugsweise ≤ 7 M.-%, bevorzugt ≤ 5 M.-%, aufweist, und/oder
b) die Elastifiziererkomponente Körner mit einer Korngröße gemäß DIN 66165-2:2016-08 von > 2 mm maximal in einer Menge von ≤ 25 M.-%, vorzugsweise ≤ 20 M.-%, bevorzugt ≤ 10 M.-%, aufweist.

3. Versatz nach einem der vorhergehenden Ansprüche,
**dadurch gekennzeichnet, dass**
der MgO-Gehalt der zumindest einen Magnesia der Hauptkomponente 85 bis < 91,5 M.-%, vorzugsweise 85 bis < 90 M.-%, bevorzugt 87 bis < 89 M.-%, beträgt.

4. Versatz nach einem der vorhergehenden Ansprüche,
**dadurch gekennzeichnet, dass**
CaO/SiO₂-Verhältnis aller Bestandteile des Trockenstoffgemisches zusammen genommen 1,2 bis 3,0, bevorzugt 1,5 bis 2,5, beträgt.

5. Versatz nach einem der vorhergehenden Ansprüche,
**dadurch gekennzeichnet, dass**
das Trockenstoffgemisch die weitere Magnesiakomponente in einer Menge von 5 bis 28 M.-%, bevorzugt von 10 bis 22 M.-%, aufweist.

6. Versatz nach einem der vorhergehenden Ansprüche,
**dadurch gekennzeichnet, dass**
a) der Versatz keinen MnO-, oder MnO₂-, oder Mn₂O₃-Rohstoff enthält, und/oder
b) der Versatz additiv zu dem Trockenstoffgemisch zumindest ein trockenes Bindemittel und/oder zumindest einen trockenen Zusatzstoff aufweist.

7. Versatz nach einem der vorhergehenden Ansprüche,
**dadurch gekennzeichnet, dass**
der Versatz zu mindestens 90 Gew.-%, vorzugsweise zu mindestens 95 Gew.-%, bevorzugt zu mindestens 98 Gew.-%, besonders bevorzugt zu 100 Gew.-%, aus dem Trockenstoffgemisch, bezogen auf die trockene Gesamtmasse des Versatzes, besteht.

8. Versatz nach einem der vorhergehenden Ansprüche,
**dadurch gekennzeichnet, dass**
a) die Elastifiziererkomponente ausschließlich gebrochene Körnung(en) aufweist,
und/oder
b) das Trockenstoffgemisch ausschließlich gebrochene Körnung(en) aufweist,
und/oder
c) die Korngrößenverteilung der Hauptkomponente und/oder die Korngrößenverteilung der Elastifiziererkomponente und/oder die Korngrößenverteilung der weiteren körnigen Magnesiakomponente und/oder die Korngrößenverteilung aller Magnesiakomponenten des Trockenstoffgemisches zusammen genommen stetig ist.

9. Grobkeramisches, feuerfestes, geformtes oder ungeformtes, gebranntes oder ungebranntes Magnesiaspinellerzeugnis, insbesondere für ein Arbeitsfutter oder eine Hintermauerung eines großvolumigen Industrieofens, vorzugsweise einer Zementofenanlage, eines Kalkschacht- oder Kalkdrehrohrofens, eines Magnesit- oder Dolomitofens, oder eines Wärmeofen oder eines Ofen zur Energieerzeugung oder eines Ofens der Stahlerzeugung oder eines Ofens der Nichteisenmetallindustrie **dadurch gekennzeichnet, dass**
das Erzeugnis hergestellt ist aus einem Versatz gemäß einem der vorhergehenden Ansprüche,
wobei das Erzeugnis vorzugsweise hergestellt ist aus einer den Versatz und zumindest ein flüssiges Bindemittel und/oder Wasser enthaltenden Pressmasse,
wobei es sich bei dem flüssigen Bindemittel vorzugsweise um ein Bindemittel aus der folgenden Gruppe handelt:
Wärmehärtendes Kunstharzbindemittel, insbesondere Phenol-Formaldehydharz oder Melasse oder Ligninsulfonat, oder ein schwefelfreies Bindemittel, insbesondere um ein Bindemittel auf Basis Dextrose,
eine organische Säure, einen Al₂O₃-Binder, Phosphorsäure, einen Phosphatbinder, Wasserglas, Ethylsilicat, oder ein Sulfat, z. B. Magnesiumsulfat oder Aluminiumsulfat, oder ein Sol-Gel-System.

10. Erzeugnis nach Anspruch 9,
**dadurch gekennzeichnet, dass**
das geformte Erzeugnis
a) ein grüner, insbesondere gepresster, Formkörper, bevorzugt ein Stein,
oder
b) ein getemperter Formkörper, bevorzugt ein Stein,
oder
c) ein gebrannter Formkörper, bevorzugt ein Stein,
ist.

11. Erzeugnis nach Anspruch 10,
**dadurch gekennzeichnet, dass**
der gebrannte Formkörper, bevorzugt der Stein,
a) einen E-Modul von 15 bis 35 GPa, bevorzugt von 18 bis 30 GPa, und/oder
b) einen G-Modul von 7 bis 16 GPa, bevorzugt von 8 bis 14 GPa, und/oder
c) eine Kaltdruckfestigkeit gemäß DIN EN 993-5:1998-12 von 40 bis 120 MPa, insbesondere von 50 bis 90 MPa,
und/oder
d) eine Kaltbiegefestigkeit nach DIN EN 993-6:1995-04 von 3 bis 10 MPa, insbesondere von 4 bis 7 MPa,
und/oder
e) einen Druckerweichungspunkt T_{0,5} gemäß DIN EN ISO 1893: 2008-09 von 1100 bis 1750 °C, bevorzugt von 1200 bis 1600°C,
und/oder
f) eine offene Porosität von 12 bis 28 Vol.-%, bevorzugt 13 bis 20 Vol.-%, bestimmt gemäß DIN EN 993-1:1995-04,
und/oder
g) eine Stauchung Zₘₐₓ bei 1700°C gemäß DIN EN ISO 1893: 2008-09 von 0,5 bis 5 lin.-%, bevorzugt 1 bis 4 lin.-%,
aufweist.

12. Verfahren zur Herstellung eines feuerfesten geformten Erzeugnisses nach einem der Ansprüche 9 bis 11,
**gekennzeichnet durch**
folgende Verfahrensschritte:
a) Mischen des Versatzes mit zumindest einem flüssigen Bindemittel und/oder Wasser zu einer Pressmasse,
b) Formen, insbesondere Pressen, der Pressmasse zu einem grünen Formkörper,
c) Vorzugsweise Trocknen des grünen Formkörpers, bevorzugt auf eine Restfeuchte zwischen 0,1 und 0,6 M.-%, insbesondere zwischen 0,2 und 0,5 M.-%, bestimmt gemäß DIN 51078:2002-12,
d) Vorzugsweise Tempern oder Brennen des grünen Formkörpers.

13. Zustellung eines großvolumigen Industrieofens, vorzugsweise eines Brennofens der Nichtmetallindustrie, bevorzugt einer Zementofenanlage, eines Kalkschacht- oder Kalkdrehrohrofens, eines Magnesit- oder Dolomitofens, oder eines Wärmeofens oder eines Ofens zur Energieerzeugung oder eines Ofens der Stahlerzeugung oder eines Ofens der Nichteisenmetallindustrie,
**dadurch gekennzeichnet, dass**
die Zustellung zumindest ein Erzeugnis gemäß einem der Ansprüche 9 bis 11 und/oder hergestellt gemäß Anspruch 12 aufweist.

14. Zustellung nach Anspruch 13,
**dadurch gekennzeichnet, dass**
die Zustellung ein Arbeitsfutter aufweist, welches das zumindest eine feuerfeste Erzeugnis aufweist,
wobei das Arbeitsfutter vorzugsweise in einem Ein- oder Mehrschichtmauerwerk eingebaut ist.

15. Zustellung nach Anspruch 13 oder 14,
**dadurch gekennzeichnet, dass**
die Zustellung eine isolierende Hintermauerung aufweist, welche das zumindest eine feuerfeste Erzeugnis aufweist.

16. Großvolumiger Industrieofen, vorzugsweise Brennofen der Nichtmetallindustrie, bevorzugt Zementofenanlage, Kalkschacht- oder Kalkdrehrohrofen, Magnesit- oder Dolomitofen, oder Wärmeofen oder Ofen zur Energieerzeugung oder Ofen der Stahlerzeugung oder Ofen der Nichteisenmetallindustrie,
**dadurch gekennzeichnet, dass**
der Industrieofen eine Zustellung gemäß einem der Ansprüche 13 bis 15 aufweist.

17. Verwendung eines Versatzes gemäß einem der Ansprüche 1 bis 8 zur Herstellung eines grobkeramischen, feuerfesten, geformten, gebrannten oder ungebrannten Magnesiaspinellerzeugnisses, vorzugsweise eines Magnesiaspinellerzeugnisses gemäß einem der Ansprüche 9 bis 11.

## Claims

1. Dry batch for the production of a coarse ceramic, refractory, shaped, fired or unfired magnesia spinel product, in particular for a working casing or a backing of a large-volume industrial furnace, preferably a cement kiln, a lime shaft or lime rotary kiln, a magnesite or dolomite kiln, or a heating kiln or a kiln for energy generation or a steel production kiln or a kiln of the non-ferrous metal industry,
comprising a dry substance mixture consisting of
a) a granular magnesia component of at least one magnesia having an MgO content < 91.5 ma.-%, preferably < 90 ma.-%, particularly preferably < 89 ma.-%, as the main component in an amount of ≥ 70 ma.-%, preferably in an amount of ≥ 85 ma.-%,
b) a granular elastifier component in an amount of 2 to 10 ma.-%, preferably of 3 to 8 ma.-%, particularly preferably of 4 to 6 ma.-%, of at least one sintered bauxite with an Al₂O₃ content of 70 to 92 ma.-%, preferably of 78 to 91 ma.-%, the elastifier component having a grain size according to DIN 66165-2:2016-08 ≤ 2.5 mm, preferably of ≤ 2 mm, and the elastifier component having grains with a grain size according to DIN 66165-2:2016-08 of ≤ 0.5 mm at most in an amount of ≤ 25 ma.-%, preferably ≤ 20 ma.-%, especially ≤ 15 ma.-%, and
c) optionally a further granular magnesia component of at least one magnesia with a higher MgO content than the main component,
d) wherein the averaged MgO content of all magnesia grades of the dry substance mixture taken together is 85 to 91.5 ma.-%, preferably 87 to 90 ma.-%, particularly preferably 87 to 89 ma.-%.

2. Batch according to claim 1,
**characterized in that**
a) the elastifier component comprises grains with a grain size according to DIN 66165-2:2016-08 of ≤ 0.2 mm at most in an amount of ≤ 10 ma.-%, preferably ≤ 7 ma.-%, especially ≤ 5 ma.-%,
and/or
b) the elastifier component comprises grains with a grain size according to DIN 66165-2:2016-08 of > 2 mm at most in an amount of ≤ 25 ma.-%, preferably ≤ 20 ma.-%, especially ≤ 10 ma.-%.

3. Batch according to one of the preceding claims,
**characterized in that**
the MgO content of the at least one magnesia of the main component is 85 to < 91.5 ma.-%, preferably 85 to < 90 ma.-%, preferably 87 to < 89 ma.-%.

4. Batch according to any of the preceding claims,
**characterized in that**
the CaO/SiO₂ ratio of all components of the dry substance mixture taken together is 1.2 to 3.0, preferably 1.5 to 2.5.

5. Batch according to one of the preceding claims,
**characterized in that**
the dry substance mixture comprises the further magnesia component in an amount of 5 to 28 ma.-%, preferably of 10 to 22 ma.-%.

6. Batch according to one of the preceding claims,
**characterized in that**
a) the batch does not contain any MnO, or MnO₂, or Mn₂O₃ raw material,
and/or
b) the batch comprises at least one dry binder and/or at least one dry additive in addition to the dry substance mixture.

7. Batch according to one of the preceding claims,
**characterized in that**
the batch consists of at least 90% by weight, preferably of at least 95% by weight, more preferably of at least 98% by weight, particularly preferably of 100% by weight, of the dry substance mixture, in relation to the total dry mass of the batch.

8. Batch according to one of the preceding claims,
**characterized in that**
a) the elastifier component exclusively comprises crushed granular material(s),
and/or
b) the dry substance mixture exclusively comprises crushed granular material(s),
and/or
c) the grain size distribution of the main component and/or the grain size distribution of the elastifier component and/or the grain size distribution of the further granular magnesia component and/or the grain size distribution of all magnesia components of the dry substance mixture taken together is continuous.

9. Coarse ceramic, refractory, shaped or unshaped, fired or unfired magnesia spinel product, in particular for a working casing or a backing of a large-volume industrial furnace, preferably a cement kiln, a lime shaft or lime rotary kiln, a magnesite or dolomite kiln, or a heating kiln or a kiln for energy production or a steel production kiln or a kiln of the non-ferrous metal industry,
**characterized in that**
the product is produced from a batch according to one of the preceding claims, wherein the product is preferably produced from a press mass containing the batch and at least one liquid binder and/or water,
wherein preferably the liquid binder is a binder from the following group:
thermosetting synthetic resin binder, in particular phenol-formaldehyde resin or molasses or lignin sulfonate, or a sulfur-free binder, in particular a binder on the basis of dextrose, an organic acid, an Al₂O₃ binder, phosphoric acid, a phosphate binder, water glass, ethyl silicate, or a sulfate, e.g. magnesium sulfate or aluminum sulfate, or a sol-gel system.

10. Product according to claim 9,
**characterized in that**
the shaped product is
a) a green, in particular pressed, shaped body, preferably a brick,
or
b) a tempered shaped body, preferably a brick,
or
c) a fired shaped body, preferably a brick.

11. Product according to claim 10,
**characterized in that**
the fired shaped body, preferably the brick, has
a) an E-modulus of 15 to 35 GPa, preferably of 18 to 30 GPa,
and/or
b) a G-modulus of 7 to 16 GPa, preferably of 8 to 14 GPa,
and/or
c) a cold compressive strength according to DIN EN 993-5:1998-12 of 40 to 120 MPa, in particular of 50 to 90 MPa,
and/or
d) a cold bending strength according to DIN EN 993-6:1995-04 of 3 to 10 MPa, in particular of 4 to 7 MPa,
and/or
e) a refractoriness under load value Tos according to DIN EN ISO 1893:2008-09 of 1100 to 1750°C, preferably of 1200 to 1600°C,
and/or
f) an open porosity of 12 to 28 vol.%, preferably 13 to 20 vol.%, determined in accordance with DIN EN 993-1:1995-04,
and/or
g) a compression Zₘₐₓ at 1700°C according to DIN EN ISO 1893: 2008-09 of 0.5 to 5 lin.-%, preferably 1 to 4 lin.-%.

12. Method for the production of a refractory shaped product according to one of claims 9 to 11,
**characterized by**
the following method steps:
a) mixing the batch with at least one liquid binder and/or water to form a press mass,
b) shaping, in particular pressing, the press mass into a green shaped body,
c) preferably drying the green shaped body, preferably to a residual moisture content of between 0.1 and 0.6 ma.-%, in particular between 0.2 and 0.5 ma.-%, determined in accordance with DIN 51078:2002-12,
d) preferably tempering or firing the green shaped body.

13. Lining of a large-volume industrial furnace, preferably a burning kiln of the non-metal industry, preferably a cement kiln, a lime shaft or lime rotary kiln, a magnesite or dolomite kiln, or a heating kiln or a kiln for energy production or a steel production kiln or a kiln of the non-ferrous metal industry,
**characterized in that**
the lining comprises at least one product according to one of claims 9 to 11 and/or produced according to claim 12.

14. Lining according to claim 13,
**characterized in that**
the lining comprises a working casing comprising the at least one refractory product, wherein preferably the working casing is installed in a single-layer or multi-layer masonry.

15. Lining according to claim 13 or 14,
**characterized in that**
the lining comprises an insulating backing comprising the at least one refractory product.

16. Large-volume industrial furnace, preferably burning kiln of the non-metal industry, preferably cement kiln, lime shaft kiln or lime rotary kiln, magnesite kiln or dolomite kiln, or heating kiln or kiln for energy production or steel production kiln or kiln of the non-ferrous metal industry,
**characterized in that**
the industrial furnace comprises a lining according to one of claims 13 to 15.

17. Use of a batch according to one of claims 1 to 8 for the production of a coarse ceramic, refractory, shaped, fired or unfired magnesia spinel product, preferably a magnesia spinel product according to one of claims 9 to 11.

## Revendications

1. Mélange sèche pour la fabrication d'un produit de spinelle de magnésie en céramique grossière, réfractaire, moulé, cuit ou non cuit, en particulier pour une revêtement de travail ou une maçonnerie arrière d'un four industriel de grand volume, de préférence d'un installation de four à ciment, d'un four à chaux à puits ou d'un four à chaux rotatif, d'un four à magnésite ou à dolomite, ou d'un four de chauffage ou d'un four pour la production d'énergie ou d'un four de production d'acier ou d'un four de l'industrie des métaux non ferreux,
comprenant un composé de matières sèches constitué de
a) d'un composant granulaire de magnésie constitué d'au moins une magnésie ayant une teneur en MgO < 91,5 % en masse, de préférence < 90 % en masse, de manière particulièrement préférée < 89 % en masse, comme composant principal en une quantité de ≥ 70 % en masse, de préférence une quantité de ≥ 85 % en masse,
b) d'un composant d'élastification granulaire en une quantité de 2 à 10 % en masse, de préférence de 3 à 8 % en masse, de manière particulièrement préférée de 4 à 6 % en masse, constitué d'au moins une bauxite frittée ayant une teneur en Al₂O₃ de 78 à 92 % en masse, de préférence de 78 à 91 % en masse, le composant d'élastification comprenant une taille du grain selon DIN 66165-2:2016-08 ≤ 2,5 mm, de préférence de ≤ 2 mm, et le composant d'élastification comprenant des grains ayant une taille du grain selon DIN 66165-2:2016-08 de ≤ 0,5 mm au maximum en une quantité de ≤ 25 % en masse, de préférence de ≤ 20 % en masse, de préférence de ≤ 15 % en masse, et
c) éventuellement d'un autre composant de magnésie granulaire constitué d'au moins une magnésie ayant une teneur en MgO supérieure à celle du composant principal,
la teneur moyenne en MgO de tous les composants de magnésie du composé de matières sèches pris ensemble étant de 85 à 91,5 % en masse, de préférence de 87 à 90 % en masse, de manière particulièrement préférée de 87 à 89 % en masse.

2. Mélange selon la revendication 1,
**caractérisé en ce que**
a) le composant d'élastification comprend des grains ayant une taille du grain selon la norme DIN 66165-2:2016-08 de ≤ 0,2 mm au maximum en une quantité de ≤ 10 % en masse, de préférence de ≤ 7 % en masse, de préférence de ≤ 5 % en masse,
et/ou
b) le composant d'élastification comprend des grains ayant une taille du grain selon DIN 66165-2:2016-08 de > 2 mm au maximum en une quantité de ≤ 25 % en masse, de préférence de ≤ 20 % en masse, de préférence de ≤ 10 % en masse.

3. Mélange selon l'une des revendications précédentes,
**caractérisé en ce que**
la teneur en MgO de ladite au moins une magnésie du composant principal est de 85 à < 91,5 % en masse, de préférence de 85 à < 90 % en masse, de préférence de 87 à < 89 % en masse.

4. Mélange selon l'une des revendications précédentes,
**caractérisé en ce que**
la proportion CaO/SiO₂ de tous les constituants du composé de matières sèches pris ensemble est de 1,2 à 3,0, de préférence de 1,5 à 2,5.

5. Mélange selon l'une des revendications précédentes,
**caractérisé en ce que**
le composé de matières sèches comprend l'autre composant de magnésie en une quantité de 5 à 28 % en masse, de préférence de 10 à 22 % en masse.

6. Mélange selon l'une des revendications précédentes,
**caractérisé en ce que**
a) le mélange ne contient pas de matière première MnO, ou MnO₂, ou Mn₁₂O₃ ,
et/ou
b) le mélange comprend, en plus du composé de matières sèches, au moins un liant sec et/ou au moins un adjuvant sec.

7. Mélange selon l'une des revendications précédentes,
**caractérisé en ce que**
le mélange est constitué à au moins 90 % en poids, de préférence à au moins 95 % en poids, de préférence à au moins 98 % en poids, de manière particulièrement préférée à 100 % en poids, du composé de matières sèches, par rapport à la masse totale sèche du mélange.

8. Mélange selon l'une des revendications précédentes,
**caractérisé en ce que**
a) le composant d'élastification comprend exclusivement une ou des granulation(s) cassée(s),
et/ou
b) le composé de matières sèches comprend exclusivement une ou des granulation(s) cassée(s),
et/ou
c) la distribution granulométrique du composant principal et/ou la distribution granulométrique du composant d'élastification et/ou la distribution granulométrique de l'autre composant de magnésie granulaire et/ou la distribution granulométrique de tous les composants de magnésie du composé de matières sèches pris ensemble est continue.

9. Produit réfractaire en céramique grossière, moulé ou non moulé , cuit ou non cuit, en particulier pour un revêtement de travail ou une maçonnerie arrière d'un four industriel de grand volume, de préférence d'un installation de four à ciment, d'un four à chaux à puits ou à chaux rotatif, d'un four à magnésite ou à dolomite, ou d'un four de chauffage ou d'un four pour la production d'énergie ou d'un four de production d'acier ou d'un four de l'industrie des métaux non ferreux.
**caractérisé en ce que**
le produit est fabriqué à partir d'un mélange selon l'une des revendications précédentes,
le produit étant de préférence fabriqué à partir d'une masse pressée contenant le mélange et au moins un liant liquide et/ou de l'eau,
le liant liquide étant de préférence un liant choisi dans le groupe suivant :
Liant de résine thermodurcissable, en particulier résine phénol-formaldéhyde ou mélasse ou lignosulfonate, ou un liant sans soufre, en particulier un liant à base de dextrose, un acide organique, un liant Al₂O₃, acide phosphorique, un liant phosphate, de verre soluble, de silicate d'éthyle, ou un sulfate, par exemple sulfate de magnésium ou sulfate d'aluminium, ou un système sol-gel.

10. Produit selon la revendication 9,
**caractérisé en ce que**
le produit moulé est
a) un corps moulé vert, en particulier pressé, de préférence une pierre,
ou
b) un corps moulé recuit, de préférence une pierre,
ou
c) un corps moulé cuit, de préférence une pierre.

11. Produit selon la revendication 10,
**caractérisé en ce que**
le corps moulé cuit, de préférence la pierre, comprend
a) un module d'élasticité de 15 à 35 GPa, de préférence de 18 à 30 GPa, et/ou
b) un module G de 7 à 16 GPa, de préférence de 8 à 14 GPa, et/ou
c) une résistance à la compression à froid selon DIN EN 993-5:1998-12 de 40 à 120 MPa, en particulier de 50 à 90 MPa,
et/ou
d) une résistance à la flexion à froid selon DIN EN 993-6:1995-04 de 3 à 10 MPa, en particulier de 4 à 7 MPa,
et/ou
e) un point de ramollissement sous pression T_{0,5} selon la norme DIN EN ISO 1893:2008-09 entre 1100 et 1750 °C, de préférence entre 1200 et 1600°C,
et/ou
f) une porosité ouverte de 12 à 28 % en volume, de préférence de 13 à 20 % en volume, déterminée selon la norme DIN EN 993-1:1995-04,
et/ou
g) un écrasement Zₘₐₓ à 1700°C selon DIN EN ISO 1893:2008-09 de 0,5 à 5 % lin., de préférence de 1 à 4 % lin..

12. Procédé de fabrication d'un produit réfractaire moulé selon l'une quelconque des revendications 9 à 11,
**caractérisé par**
les étapes de procédure suivantes :
a) Mélange du mélange avec au moins un liant liquide et/ou de l'eau pour obtenir une masse de pressage,
b) Moulage, en particulier pressage, de la masse de pressage en un corps moulé vert,
c) De préférence, séchage du corps moulé vert, de préférence à une humidité résiduelle comprise entre 0,1 et 0,6 % en masse, en particulier entre 0,2 et 0,5 % en masse, déterminée selon la norme DIN 51078:2002-12,
d) De préférence, recuisson ou cuisson du corps moulé vert.

13. Revêtement d'un four industriel de grand volume, de préférence d'un fourneau de l'industrie non métallique, de préférence d'un installation de four à ciment, d'un four à chaux à puits ou d'un four rotatif à chaux, d'un four à magnésite ou à dolomite, ou d'un four de chauffage ou d'un four de production d'énergie ou d'un four de production d'acier ou d'un four de l'industrie des métaux non ferreux,
**caractérisé en ce que**
le revêtement comprend d'au moins un produit selon l'une des revendications 9 à 11 et/ou fabriqué selon la revendication 12.

14. Revêtement selon la revendication 13,
**caractérisé en ce que**
le revêtement comprend un revêtement de travail comprenant ledit au moins un produit réfractaire,
le revêtement de travail étant de préférence intégré dans une maçonnerie monocouche ou multicouche.

15. Revêtement selon la revendication 13 ou 14,
**caractérisé en ce que**
le revêtement comprend une maçonnerie arrière isolante qui comprend ledit au moins un produit réfractaire.

16. Four industriel à grand volume, de préférence fourneau de l'industrie non métallique, de préférence installation de four à ciment, four à chaux à puits ou four rotatif à chaux, four à magnésite ou four à dolomite, ou four de chauffage ou four de production d'énergie ou four de production d'acier ou four de l'industrie des métaux non ferreux,
**caractérisé en ce que**
le four industriel comprend un revêtement selon l'une des revendications 13 à 15.

17. Utilisation d'un mélange selon l'une quelconque des revendications 1 à 8 pour la fabrication d'un produit de spinelle de magnésie en céramique grossière, réfractaire, moulé, cuit ou non cuit, de préférence un produit de spinelle de magnésie selon l'une quelconque des revendications 9 à 11.
